(19) Europäisches Patentamt
European Patent Office
Office européen des brevets

(11) EP 1 047 235 A1

(12) # EUROPEAN PATENT APPLICATION

published in accordance with Art. 158(3) EPC

(43) Date of publication:
**25.10.2000 Bulletin 2000/43**

(21) Application number: **99922526.1**

(22) Date of filing: **27.05.1999**

(51) Int. Cl.$^7$: **H04L 27/22**

(86) International application number:
**PCT/JP99/02805**

(87) International publication number:
**WO 00/28710 (18.05.2000 Gazette 2000/20)**

(84) Designated Contracting States:
**AT BE CY DE DK ES FI FR GB GR IE IT LU MC NL PT SE**

(30) Priority: **09.11.1998 JP 31744198**

(71) Applicant:
**MITSUBISHI DENKI KABUSHIKI KAISHA**
**Tokyo 100-8310 (JP)**

(72) Inventors:
- **FUJIMURA, A.,**
**Mitsubishi Denki Kabushiki Kaisha**
**Chiyoda-ku, Tokyo 100-8310 (JP)**
- **KOJIMA, T.,**
**Mitsubishi Denki Kabushiki Kaisha**
**Chiyoda-ku, Tokyo 100-8310 (JP)**

(74) Representative:
**Pfenning, Meinig & Partner**
**Mozartstrasse 17**
**80336 München (DE)**

(54) **CARRIER PHASE ESTIMATOR DEVICE AND DEMODULATOR**

(57) A carrier phase estimation apparatus comprises a non-linear processor (20) which removes a modulated component from a received baseband signal to obtain a non-modulated complex data, a first moving average computing unit (25a) which computes a moving average of the non-modulated complex data, a carrier phase computing unit (24) which computes a carrier phase from a vector angle represented by the moving average, and a filter band computing unit (5) which controls a band of the first moving average computing unit (25a) by using data for r symbol in the past of the non-modulated complex data.

FIG.1

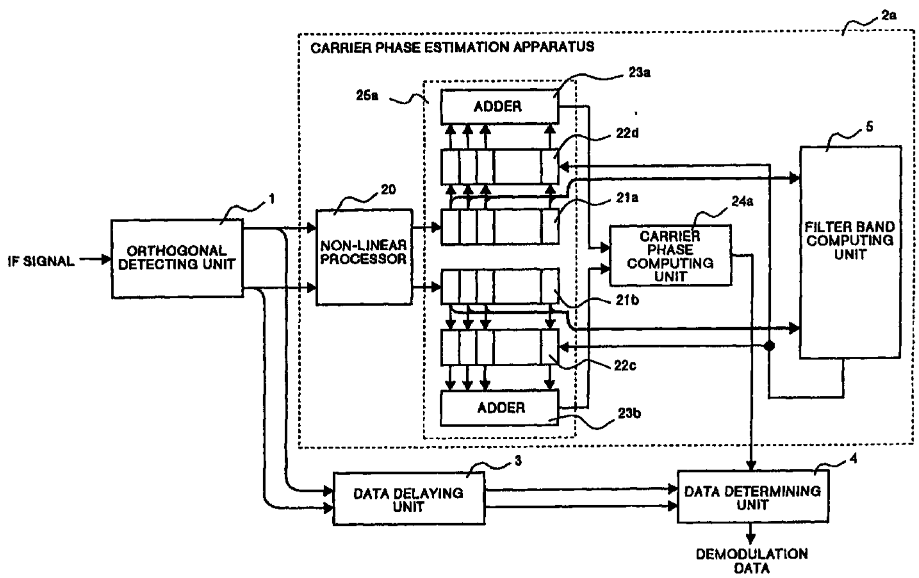


EP 1 047 235 A1

## Description

TECHNICAL FIELD

The present invention relates to a carrier phase estimation apparatus in a digital radio communication system or the like as well as to a demodulator which uses the carrier phase estimation apparatus.

BACKGROUND ART

A carrier phase estimation apparatus based on the conventional technology and a demodulator which uses the carrier phase estimation apparatus is, for instance, disclosed in "Filter and Carrier Phase Estimating Device using the same" in Japanese Patent Laid-Open Publication No. HEI 6-276245.

Description is made hereinafter for the conventional type of carrier phase estimation apparatus and a demodulator which uses the carrier phase estimation apparatus with reference to the drawings. Fig. 12 is a block diagram showing configuration of a demodulator which uses a carrier phase estimation apparatus based on the conventional technology.

In Fig. 12, designated at the reference numeral 1 is a quasi-synchronicity detector which receives an IF signal, detects quasi-synchronicity,converts an analog baseband signal to digital complex baseband data, and outputs this converted data. Designated at the reference numeral 2 is a carrier phase estimation apparatus which receives the digital complex baseband data outputted by the quasi-synchronicity detector 1, computes a carrier phase, and output the computed carrier phase as an estimated value of the carrier phase. Designated at the reference numeral 3 is a data delaying unit which receives the digital complex baseband data outputted by the quasi-synchronicity detector 1, delays the received digital complex baseband data, prepares a baseband delayed data, and outputs the baseband delayed data. Designated at the reference numeral 4 is a data determining unit for generating an axis for determination from the estimated value of the carrier phase outputted by the carrier phase estimation apparatus 2, determines the baseband delayed data outputted by the data delaying unit 3 according to this axis for determination, and outputs the determined data as demodulation data.

Designated at the reference numeral 20, in the carrier phase estimation apparatus 2 of Fig. 12, is a non-linear processor which removes a modulated component from the digital complex baseband data outputted by the quasi-synchronicity detector 1. Designated at the reference numeral 25 is a moving average computing unit which receives a data series from which a modulated component has been removed outputted by the non-linear processor 20 and files the received data series to compute a moving average described later. Designated at the reference numeral 24 is a carrier phase computing unit which transforms the coordinates of the data outputted by the moving average computing unit 25, computes an estimated value of the carrier phase, and outputs the computed estimated value of the carrier phase.

Furthermore, designated at the reference numerals 21a, 21b, in the moving average computing unit 25 of Fig. 12, are m-stage shift registers each of which receives the data series obtained by removing the modulated component therefrom and outputted by the non-linear processor 20 and successively shift the received data series over the m (m is an odd number) stages respectively. Designated at the reference numerals 22a, 22b are weightage units each of which multiplies the data in each of the m-stage shift registers 21a, 21b by a weightage respectively. Designated at the reference numerals 23a, 23b are adders each of which adds all the data outputted from each of the weightage units 22a, 22b respectively and outputs the result of addition as a moving average.

Herein, it will be assumed that the result of addition is used as the moving average to make the description simpler. However, it is needless to say that, a value obtained by dividing the result of addition by a number of added data may be used as the moving average.

Fig. 13 is a block diagram showing detail configuration of the quasi-synchronicity detector 1. In Fig. 13, designated at the reference numeral 12 is an oscillator which outputs a local signal. Designated at the reference numeral 13 is a $\pi/2$ phase shifter which shifts the phase of the local signal outputted by the oscillator 12 by $\pi/2$. Designated at the reference numeral 11a is a multiplier which multiplies the received IF signal and the local signal outputted from the oscillator 12. Designated at the reference numeral 11b is another multiplier which multiplies the received IF signal and a signal outputted from the $\pi/2$ phase shifter 13. Designated at the reference numerals 14a, 14b are low-pass filters (abbreviated as LPF hereinafter) each of which filters the signal outputted by each of the multipliers 11a, 11b and outputs an analog baseband signal. Designated at the reference numerals 15a, 15b are analog-to-digital converters (abbreviated as A/D converter hereinafter) each of which subjects the analog baseband signal outputted by each of the LPFs 14a, 14b respectively to analog-to-digital conversion, and outputs the digital complex baseband data.

Fig. 14 explains the operations of the data determining unit 4 shown in Fig. 12.

Operations of the demodulator which uses the conventional type of carrier phase estimation apparatus is explained here with reference to Fig. 12, Fig. 13, and Fig. 14. Herein, description is made for an operation when the IF signal received by the demodulator is, for instance, a QPSK-modulation signal as a PSK-modulation signal.

At first, as shown in Fig. 12, the received QPSK-modulation IF signal $S_{IF}$ is inputted into the quasi-synchronicity detector 1. In the quasi-synchronicity detector 1, the oscillator 12 shown in Fig. 13 outputs a local signal $\cos(2\pi f_c t)$ . The multiplier 11a multiplies the IF signal $S_{IF}$ inputted into the quasi-synchronicity detector 1 and the local signal $\cos(2\pi f_c t)$ outputted by the oscillator 12. The multiplier 11b shown in Fig. 13 multiplies the signal $\cos(2\pi f_c(t+\pi/2)) = \sin(2\pi f_c t)$ which is the result of phase shifting of the local signal by the $\pi/2$ phase shifter 13 and the received IF signal $S_{IF}$. Each of the LPFs 14a, 14b shown in Fig. 13 filters the output from each of the multipliers 11a, 11b respectively, and outputs an analog baseband signal respectively. Each of the A/D converters 15a, 15b shown in 12 converts the analog baseband signal at each Nyquist point of time to digital complex baseband data ($I_n$, $Q_n$ {n = 0, 1, 2, 3, • • •} and outputs the digital complex baseband data. Herein, $I_n$ is an in-phase component of the digital complex baseband data, and $Q_n$ is an orthogonal component of the digital complex baseband data. As described above, the quasi-synchronicity detector 1 shown in Fig. 12 and Fig. 13 carries out quasi-synchronicity detection of the received IF signal.

Next, description is made for an operation of the demodulator which uses the conventional type of carrier phase estimation apparatus using Fig. 12.

At first, the non-linear processor 20 quadruples the digital complex baseband data ($I_n$, $Q_n$) inputted from the quasi-synchronicity detector 1 so as to remove a modulation component therefrom. The quadruple processing comprises the steps of computing

$$C_n = A \times \cos(\Delta\theta_n)$$

$$\text{and } S_n = A \times \sin(\Delta\theta_n)$$

from

$$\Delta\theta_n = (4 \times \tan^{-1}(Q_n/I_n)) \bmod 2\pi$$

$$\text{and } A = (I_n^{\ 2} + Q_n^{\ 2})^{1/2} \text{ (where n = 0, 1, 2, 3, • • •)}$$

and outputting the computed values. The data series ($C_n$, $S_n$) obtained by removing the modulated component therefrom is inputted into the moving average computing unit 25 shown in Fig. 12.

In the moving average computing unit 25 shown in Fig. 12, the m-stage shift register 21a receives the data series $C_n$ {n = 0, 1, 2, 3, • • •}. Furthermore, in the moving average computing unit 25, the m-stage shift register 21b receives the data series $S_n$ {n = 0, 1, 2, 3, • • •}. The weightage unit 22a, 22b multiply the data series ($C_n$, $S_n$) in the k ($1 \le k \le m$) stage shift registers and a weightage $W_k$, and output the result ($W_k \times C_k$, $W_k \times S_k$) of the multiplication to the adders 23a, 23b.

It is assumed that the value of the weightage increases from $W_1$ to $W_{(m+1)/2}$ and decreases from $W_{(m+1)/2}$ to $W_m$. For instance, the value of weightage may be decided according to the relation $W_k = \alpha^{-L}$ (L = |k-(m+1)/2|) . Therefore, assuming $\alpha$ = 0.7 and m = 5, the values of the weightage factor will be as follows:

$W_1 = 0.7^{|1-(5+1)/2|} = 0.7^{|-2|} = 0.49$
$W_2 = 0.7^{|2-(5+1)/2|} = 0.7^{|-1|} = 0.70$
$W_3 = 0.7^{|3-(5+1)/2|} = 0.7^{|0|} = 1.\ 00$
$W_4 = ^{|1|} = 0.70$
and $W_5 = ^{|-2|} = 0.49$.

Similarly, assuming $\alpha$ = 0.9, the values of the weightage will be as follows:

$W_1 = 0.81$
$W_2 = 0.90$
$W_3 = 1.00$
$W_4 = 0.90$
and $W_5 = 0.81$.

In the conventional type of carrier phase estimation apparatus and the demodulator which uses this carrier phase estimation apparatus, the value $\alpha$ ($\alpha \le 1$) becomes a parameter for deciding a band of a filter for carrier recovery. When a larger value is used as $\alpha$, then a higher weightage is given and hence the band of the filter for carrier recovery can be made narrower. On the other hand, when a smaller value is used as $\alpha$, then a less weightage is given and hence the band of the filter for carrier recovery can be made wider.

The adder 23a shown in Fig. 12 adds all the data from $W_1 \times C_1$ up to $W_m \times C_m$, outputted from the weightage unit 22a, and outputs the result of addition

$$WC_n = \sum_{n=1}^{m} (W_n \times C_n)$$

to the carrier phase computing unit 24. The adder 23b adds all the data from $W_1 \times S_1$ up to $W_m \times S_m$ outputted from the weightage unit 22b, and outputs the result of addition

$$WS_n = \sum_{n=1}^{m} (W_n \times S_n)$$

to the carrier phase computing unit 24. Through the processing described above, data ($WC_n$, $WS_n$) is outputted from the moving average computing unit 25 to the carrier phase computing unit 24.

The carrier phase computing unit 24 shown in Fig. 12 receives the data ($WC_n$, $WS_n$), and outputs a value obtained by dividing a reverse tangent value by 4, namely

$$\theta C_n = (1/4 \times \tan^{-1} (WS_n/WC_n) + \pi/4) \bmod 2\pi$$

as an estimated value of the carrier phase.

The estimated value of the carrier phase $\theta C_n$ outputted by the carrier phase estimation apparatus 2 is a phase of a carrier at time which is n-((m+1)/2) symbol before. Therefore, the data delaying unit 3 shown in Fig. 12 delays the digital complex baseband data ($I_n$, $Q_n$) {n = 0, 1, 2, 3, • • •} for (m+1)/2 symbol. prepares a delay data ($I_j$, $Q_j$) (j = n - (m+1)/2) from the digital complex baseband, and outputs the data.

The data determining unit 4 shown in Fig. 12 generates four axes of determination of

$$(\theta C_n + k\pi/2) \bmod 2\pi \; (k \in \{0, 1, 2, 3\})$$

from the estimated value of the carrier phase $\theta C_n$, determines the delay data ($I_j$, $Q_j$) of the complex baseband according to the generated axes of determination, and outputs the determined data as demodulation data.

For example, a case is explained in which a demodulator caries out QPSK modulation of a data series having been subjected to differential coding according to the transmission-side mapping shown in Fig. 14(a). When a receiver-side estimated value of the carrier phase $\theta C_n$ and a data series ($I_j$, $Q_j$) shown in Fig. 14(b) are obtained (represented by a heavy line in Fig. 14(b)), data before differential decoding is determined as (0, 1) according to in total four axes of determination of the axis represented by $\theta C_n$ and axes represented by three dotted lines in Fig. 14(b). The data determining unit 4 shown in Fig. 12 performs differential decoding with respect to the data series having been subjected to differential coding, differential decodes the data after determination is made to obtain the demodulation data.

As described above, in the conventional type of carrier phase estimation apparatus and the demodulator which uses the carrier phase estimation apparatus, a filter band for carrier recovery is decided according to a value of $\alpha$, so that the stability and tracking capability of a carrier phase varies depending on the value of $\alpha$. When the value $\alpha$ is made larger, the stability of a carrier phase is enhanced and the BER performance in a Gaussian noise channel is enhanced, however, the tracking capability of the carrier phase is degraded, therefore, the BER performance is reduced in a fading channel in which a drop in signal power or sharp fluctuations in a carrier phase may occur. On the other hand, when the value $\alpha$ is made smaller, the tracking capability of a carrier phase is enhanced and the BER performance in a fading channel described above is enhanced, however, the stability of a carrier phase is reduced, therefore, the BER performance in a Gaussian noise channel is degraded.

Thus, in the conventional type of carrier phase estimation apparatus and the demodulator which uses such a carrier phase estimation apparatus, it is impossible to realize an excellent BER performance in both the Gaussian noise channel and the fading channel unless the weightage factors which decides the filter band are switched using some method.

Furthermore, in the conventional type of carrier phase estimation apparatus and the demodulator which uses such a carrier phase estimation apparatus, a large number of circuits are required for processing such as weighting in the weightage units 22a, 22b and estimation of a channel based on statistical processing.

Therefore, it is an object of the present invention to provide a carrier phase estimation apparatus and a demodulator which uses this carrier phase estimation apparatus which enables realization of an excellent BER performance in both the Gaussian noise channel and the fading channel with a small circuit. Such a carrier phase estimation apparatus and a demodulator is realized by detecting a drop in signal power or sharp phase fluctuation due to fading with high precision at a short period of time from a received data series having been converted to a non-modulated component through non-linear processing according to an output value from a filter for carrier recovery which can be configured with a simple digital circuit such as a shift register, and widening the band of the filter for carrier recovery when detecting the events and narrowing the band in the other cases using the detected signal.

Furthermore, it is another object of the present invention to provide a carrier phase estimation apparatus and a demodulator which uses this carrier phase estimation apparatus which enables speeding up of processing by adding some devising the method of computing when computations are to be realized by a microprocessor or the like.

## DISCLOSURE OF THE INVENTION

The first carrier phase estimation apparatus according to the present invention comprises a non-linear processor for outputting a non-modulated complex data form m (m = 1, 2, 3, • • •) symbol obtained by carrying out non-linear conversion of the received baseband data having been subjected to $2^N$ (N = 1, 2, 3 • • •) value phase modulation from which a modulation component has been removed; a first moving average computing unit for adding the non-modulated complex data or computing an average of the non-modulated complex data and outputting the result of addition or the average as a first moving average; a filter band computing unit for controlling a band of the first moving average computing unit using the non-modulated complex data for r (r = 1, 2, 3, • • •) symbol; and a carrier phase computing unit for computing a vector angle represented by the first moving average, computing a carrier phase by dividing the computed vector angle by $2^N$, and outputting the computed carrier phase value as an estimated value of the carrier phase.

In the second carrier phase estimation apparatus according to the present invention; the filter band computing unit comprises a second moving average computing unit for adding the non-modulated complex data for r symbol in the past or computing an average of the non-modulated complex data for r symbol in the past and outputting the result of addition or the average as a second moving average; a vector length computing unit for computing a length of a vector represented by the second moving average and outputting the computed length of the vector as a vector length; and a filter band deciding unit for outputting a band-controlled signal indicating that a band of the first moving average computing unit has been widened when the vector length is short and that the band of the first moving average computing unit has been narrowed when the vector length is long.

In the third carrier phase estimation apparatus according to the present invention, the filter band computing unit comprises a second moving average computing unit for adding the non-modulated complex data for r symbol in the past or computing an average of the non-modulated complex data for r symbol in the past and outputting the result of addition or the average as a second moving average; a vector phase deviation computing unit for computing a phase deviation of a vector angle represented by the second moving average and outputting the computed phase deviation as a vector phase deviation; and a filter band deciding unit for outputting a band-controlled signal indicating that a band of the first moving average computing unit has been widened when the vector phase deviation is large and that the band of the first moving average computing unit has been narrowed when the vector phase deviation is small.

In the fourth carrier phase estimation apparatus according to present invention, the filter band computing unit comprises a second moving average computing unit for adding the non-modulated complex data for r symbol in the past or computing an average of the non-modulated complex data for r symbol in the past and outputting the result of addition or the average as a second moving average; a vector length computing unit for computing a length of a vector represented by the second moving average and outputting the computed length of the vector as a vector length; a vector phase deviation computing unit for computing a phase deviation of a vector angle represented by the second moving average and outputting the computed phase deviation as a vector phase deviation; and a filter band deciding unit for outputting a band-controlled signal indicating that a band of the first moving average computing unit has been widened when the vector length is short or the vector phase deviation is large and that the band of the first moving average computing unit has been narrowed when the vector length is long and the vector length is small.

In the fifth carrier phase estimation apparatus according to the present invention, the first moving average computing unit comprises a in-stage shift register for accumulating the non-modulated complex data for in symbol in the past; a data output control unit for outputting data for f (1 ≤ f ≤ m) symbol with the non-modulated complex data for m/2-nd symbol in the past as a center out of the accumulated non-modulated complex data for m symbol as data required for estimation of the carrier phase. based on the band-controlled signal outputted from the filter band computing unit for controlling a band of the first moving average computing unit; and an adder for adding the data required for estimation of the carrier phase or computing an average of the data required for estimation of the carrier phase, and outputting the result of addition or the average as the first moving average.

In the sixth carrier phase estimation apparatus according to present invention, the vector phase deviation computing unit computes a specified y (y = 1, 2, 3, • • •) symbol difference value of the vector angle represented by the second moving average, and outputs the computed y symbol difference value as the vector phase deviation.

In the seventh carrier phase estimation apparatus according to the present invention, the vector phase deviation computing unit outputs an average of z ($1 \leq z \leq y$) number of difference information out of the y number of difference information in total of specified y-symbol difference value from one-symbol difference value of a vector represented by the second moving average as the vector phase deviation.

In the eighth carrier phase estimation apparatus according to the present invention, the vector phase deviation computing unit adds an absolute value of a data obtained by differentiating the in-phase component of the second moving average for y symbol to an absolute value of a data obtained by differentiating the orthogonal component of the second moving average for y symbol, and outputs the result of addition as the vector phase deviation.

In the ninth carrier phase estimation apparatus according to the present invention, the non-linear processor only phase information of the received baseband signal subjected to $2^N$ value phase modulation, and outputs the non-modulated complex data obtained by carrying out non-linear conversion of the phase information to remove a modulated component therefrom.

A demodulator which uses the first carrier phase estimation apparatus according to the present invention comprises a quasi-synchronicity detector for subjecting a received IF signal having been subjected to $2^N$ (N = 1, 2, 3, • • •) value phase modulation to quasi-synchronicity detection, and converting the detected signal into a received baseband signal; a non-linear processor for outputting non-modulated complex data obtained by carrying out non-linear conversion with respect to the received baseband signal having been subjected to $2^N$ value phase modulation in order to remove a modulated component therefrom; a first moving average computing unit for adding the non-modulated complex data or computing an average of the non-modulated complex data and outputting the result of addition or the average as a first moving average; a carrier phase computing unit for computing a vector angle represented by the first moving average, computing a carrier phase by dividing the computed vector angle by $2^N$, and outputting the computed carrier phase value as an estimated value of the carrier phase; a filter band computing unit for controlling a band of the first moving average computing unit using the non-modulated complex data for r symbol in the past out of the non-modulated complex data; a data delaying unit for delaying the received baseband signal outputted from the quasi-synchronicity detector; and a data determining unit for determining the delayed received baseband signal using the estimated value of the carrier phase outputted by the carrier phase estimating unit, and subjecting the determined data to differential decoding in order to obtain demodulation data.

In a demodulator which uses the second carrier phase estimation apparatus according to the present invention, the quasi-synchronicity detector comprises a limiter for amplifying the received IF signal subjected to $2^N$ value phase modulation to a specified amplitude; and a phase detector for detecting a phase of the received IF signal amplified to a specified amplitude by the limiter and outputting the phase of the detected received IF signal as a received baseband phase signal; wherein the non-linear processor outputs the non-modulated complex data obtained by carrying out non-linear conversion of phase information for the received baseband signal having been subjected to $2^N$ value phase modulation in order to remove a modulated component therefrom; the data delaying unit delays phase data for a received baseband signal outputted from the phase detector; and the data determining unit determines phase data for the delayed received baseband signal using the estimated value of the carrier phase as output from the carrier phase estimating unit, and subjects the determined data to differential decoding in order to obtain demodulation data.

In a demodulator which uses the third carrier phase estimation apparatus according to the present invention, the quasi-synchronicity detector carries out quasi-synchronicity detection of the received IF signal having been subjected to $2^N$ value phase modulation in order to convert the detected signal to the received baseband data; the data determining unit determines the delayed received baseband data using the estimated value of the carrier phase as output from the carrier phase estimating unit, and outputs the determined data; and the demodulator further comprises a unique word detector for computing correlation in $2^N$ unique word patterns which may occur due to phase uncertainty for the determination data in order to output a phase uncertainty removal signal indicating with which unique word pattern, of the $2^N$ unique word patterns, the data is detected in detection of a unique word; and a data correction unit for correcting the determined data using the phase uncertainty removal signal in order to remove the phase uncertainty therefrom, and outputting the data from which the phase uncertainty is removed as demodulation data.

BRIEF DESCRIPTION OF THE DRAWINGS

Fig. 1 is a block diagram showing configuration of a demodulator which uses a carrier phase estimation apparatus according to Embodiment 1 of the present invention; Fig. 2 is a block diagram showing configuration of a filter band computing unit for the demodulator which uses the carrier phase estimation apparatus according to Embodiment 1 of the present invention; Fig. 3 explains the operations of the demodulator which uses the carrier phase estimation apparatus according to Embodiment 1 of the present invention; Fig. 4 explains the operations of the demodulator which uses the carrier phase estimation apparatus according to Embodiment 1 of the present invention; Fig. 5 explains the operations of the demodulator which uses the carrier phase estimation apparatus according to Embodiment 1 of the present invention; Fig. 6 explains the operations of the demodulator which uses the carrier phase estimation apparatus according to Embodiment 1 of the present invention; Fig. 7 is a block diagram showing configuration of a demodulator which uses a carrier phase estimation apparatus according to Embodiment 2 of the present invention; Fig. 8 is a block diagram showing configuration of a filter band computing unit for the demodulator which uses the carrier phase estimation apparatus according to Embodiment 2 of the present invention; Fig. 9 explains the operations of the demodulator which uses the carrier phase estimation apparatus according to Embodiment 2 of the present invention; Fig. 10 explains the operations of the demodulator which uses the carrier phase estimation apparatus according to Embodiment 2 of the present invention; Fig. 11 is a block diagram showing configuration of a demodulator which uses a carrier phase estimation apparatus according to Embodiment 3 of the present invention; Fig. 12 is a block diagram showing configuration of a demodulator which uses a carrier phase estimation apparatus based on the conventional technology; Fig. 13 is a block diagram showing configuration of a quasi-synchronicity detector of the demodulator which uses the conventional type of carrier phase estimation apparatus; and Fig. 14 explains the operations of the demodulator which uses the conventional type of carrier phase estimation apparatus.

BEST MODE FOR CARRYING OUT THE INVENTION

In a carrier phase estimation apparatus according to Embodiment 1 of the present invention and a demodulator which uses this carrier phase estimation apparatus, the demodulator estimates a carrier phase using amplitude information for a burst signal subjected to differential encoding QPSK (DQPSK)-modulation, and demodulates the data by synchronicity detection and differential decoding. Description is made hereinafter for the demodulator which uses the carrier phase estimation apparatus according to Embodiment 1 of the present invention with reference to the related drawings.

Fig. 1 is a block diagram showing configuration of the demodulator which uses a carrier phase estimation apparatus according to Embodiment 1 of the present invention. In Fig. 1, designated at the reference numeral 2a is a carrier phase estimation apparatus which receives the digital complex baseband data outputted by a quasi-synchronicity detector 1, computes a carrier phase, and output the computed carrier phase as an estimated value of the carrier phase. Designated at the reference numeral 5 is a filter band computing unit which detects whether there is a drop in power of the received signal or there are sharp fluctuations in a carrier phase due to fading and shadowing or not from a data series inputted into the m-stage shift registers 21a, 21b and outputs a filter bandwidth (FW) for deciding a filter band for estimating a carrier phase according to result information for the detection. Designated at the reference numeral 22c, 22d are data output control units for selecting data to be outputted from the m-stage shift registers 21a, 21b to the adders 23a, 23b according to the filter bandwidth for deciding a filter band for carrier-phase estimation outputted by the filter band computing unit 5. Designated at the reference numeral 25a is a first moving average computing unit comprising the m-stage shift registers 21a, 21b, data output control units 22c, 22d, and adders 23a, 23b. Each of the data output control units 22c, 22d which control the data output selects, when a data series obtained by removing a modulated component outputted by a non-linear processor 20 is inputted into the m-stage shift registers 21a, 21b, data from the data inputted into the shift registers 21a, 21b according to the filter bandwidth outputted by the filter band computing unit 5 and outputs the selected data to the adders 23a, 23b. Each of the adders 23a, 23b adds the data outputted by the data output control unit 22c, 22d and outputs the result of addition as a moving average. Designated at the reference numeral and at 24a a carrier phase computing unit which transforms the coordinates of the data outputted by the adders 23a, 23b, computes an estimated value of the carrier phase, and outputs the computed estimated value of the carrier phase.

Herein, it will be assumed that the result of addition is used as the moving average to make the description simpler. However, it is needless to say that, a value obtained by dividing the result of addition by a number of added data may be used as the moving average.

Fig. 2 is a block diagram showing detail configuration of the filter band computing unit 5 of the demodulator which uses the carrier phase estimation apparatus according to Embodiment 1 of the present invention.

In Fig. 2, designated at the reference numeral 50a is a $C_n$ moving average computing unit which adds all the data from $C_1$ to $C_r$ outputted from the m-stage shift register 21a to output the result of addition

$$\Sigma C_n = \sum_{n=1}^{r} C_n .$$

Designated at the reference numeral at 50b is a $S_n$ moving average computing unit which adds all the data from $S_1$ to $S_r$ outputted from the m-stage shift register 21b to output the result of addition

$$\Sigma S_n = \sum_{n=1}^{r} S_n .$$

Designated at the reference numeral 51a is a shift register comprising a (m-r) stage register which receives the result of addition $\Sigma C_n$. Designated at the reference numeral 51b is a shift register comprising a (m-r) stage register which receives the result of addition $\Sigma S_n$. Designated at the reference numeral 52 is a vector phase deviation computing unit which receives a portion or all the data in the shift registers 51a, 51b and computes a vector phase deviation VD. Designated at the reference numeral 53 is a vector length computing unit which computes a vector length VL from the data inputted in a (m-r)/2 stage when the number of stages of the shift registers 51a, 51b is an even number and computing a vector length VL from the data inputted in a (m-r+1)/2 stage when the number of stages of the shift registers 51a, 51b is an odd number, and outputs the vector length. Designated at the reference numeral 54 is a filter band deciding unit which decides the filter bandwidth for the carrier phase estimation apparatus 2a from the vector length VL and vector phase deviation VD.

The $C_n$ moving average computing unit 50a and the $S_n$ moving average computing unit 50b are the Embodiment 1 of the second moving average computing unit, and the $C_n$ moving average computing unit 50a and the $S_n$ moving average computing unit 50b collectively represent the second moving average computing unit.

In Fig. 1 and Fig. 2, the same reference numerals are assigned to components corresponding to those in the demodulator which uses the conventional type of carrier phase estimation apparatus shown in Fig. 12, and description thereof is omitted herein.

Operations of the demodulator which uses the carrier phase estimation apparatus according to Embodiment 1 of the present invention is described below.

In the same manner as the demodulator which uses the conventional type of carrier phase estimation apparatus, a complex baseband signal with its synchronous wave detected by the quasi-synchronicity detector 1 is inputted into the carrier phase estimation apparatus 2a as well as into a data delaying unit 3. The non-linear processor 20 of the carrier phase estimation apparatus 2a removes, similarly to the demodulator which uses the conventional type of carrier phase estimation apparatus, a modulation component by multiplying by four or through reverse modulation. A data series ($C_n$, $S_n$) (n = 0, 1, 2, 3, • • •) after removal of the modulated component is inputted into the m-stage shift registers 21a, 21b in the first moving average computing unit 25a.

The filter band computing unit 5 receives each data ($C_1$~$C_r$, $S_1$~$S_r$) ($1 \le r \le m$) from the first stage to the r-th stage out of the data ($C_1$~$C_m$, $S_1$~$S_m$) from the first stage to the m-th stage received by the m-stage shift registers 21a, 21b respectively. The filter band computing unit 5 detects whether there is a drop in the power of the received signal or there are sharp fluctuations in a carrier phase due to fading and shadowing or not from this data, and outputs a filter bandwidth FW from which the filter band for carrier phase estimation is decided. The filter bandwidth FW ($1 \le FW \le m$) is a value showing how many data of the data received in the m-stage shift registers 21a, 21b is used for estimating a carrier phase.

The data output control unit 22d inputs only the data described below, of the data $C_1$~$C_m$, into the adder 23a according to the value of the filter bandwidth FW.

$$C_{m/20} \quad \text{when } FM = 1,$$
$$C_{m/2} \text{ and } C_{m/2+10} \quad \text{when } FM = 2,$$
$$C_{m/2-1} \sim C_{m/2+10} \quad \text{when } FM = 3,$$
$$C_{m/2-1} \sim C_{m/2+20} \quad \text{when } FM = 4,$$
$$C_{m/2-2} \sim C_{m/2+20} \quad \text{when } FM = 5,$$
$$\vdots$$
$$\vdots$$
$$C_{2} \sim C_{m0} \quad \text{when } FM = m-1,$$
$$C_{1} \sim C_{m0} \quad \text{when } FM = m .$$

Similarly, the data output control unit 22c inputs only the data described below, of the data $S_1$~$S_m$, into the adder 23b according to the value of the filter bandwidth FW.

$$S_{m/20} \quad \text{when } FM = 1,$$
$$S_{m/2} \text{ and } S_{m/2+10} \quad \text{when } FM = 2,$$
$$S_{m/2-1} \sim S_{m/2+10} \quad \text{when } FM = 3,$$
$$S_{m/2-1} \sim S_{m/2+20} \quad \text{when } FM = 4,$$
$$S_{m/2-2} \sim S_{m/2+20} \quad \text{when } FM = 5,$$
$$\vdots$$
$$\vdots$$
$$S_{2} \sim S_{m0} \quad \text{when } FM = m-1,$$
$$S_{1} \sim S_{m0} \quad \text{when } FM = m .$$

Each of the data output control unit 22c, 22d may be formed from an exclusive OR (abbreviated as XOR hereinafter) element.

The adder 23a adds all of the data outputted from the data output control unit 22d, and outputs the result of addition $AC_n$. Similarly, the adder 23b adds all of the data outputted from the data output control unit 22c, and outputs the result of addition $AS_n$.

The carrier phase computing unit 24a receives data ($AC_n$, $AS_n$) outputted from the first moving average computing unit 25a, computes an estimated value of the carrier phase

$$\theta C_n = (1/4 \times \tan^{-1}(AS_n/AC_n) + \pi/4) \bmod 2\pi$$

and outputs the value.

The processing thereafter is the same as that for the demodulator which uses the conventional type of carrier phase estimation apparatus. A data determining unit 4 determines complex baseband data delayed for (m+1)/2 symbols in the data delaying unit 3 using the estimated value of the carrier phase $\theta C_n$, and outputs the demodulation data.

Operation of the filter band computing unit 5 of the demodulator which uses the carrier phase estimation apparatus according to Embodiment 1 of the present invention are explained below with reference to Fig. 2.

The filter band computing unit 5 detects a drop in signal power in a fading transmission path or sharp fluctuations in a carrier phase using a vector length shown in results of additions ($\Sigma C_n$, $\Sigma S_n$) and the amount of change in the vector angle. The filter band computing unit 5 widens the filter band for carrier recovery in the carrier phase estimation apparatus 2a when it is detecting the drop in signal power in a fading transmission path or sharp fluctuations in a carrier phase so that the carrier phase tracking performance are enhanced.

In the filter band computing unit 5, the Cn moving average computing unit 50a adds all of the data from $C_1$ to $C_r$, and outputs the result of addition $\Sigma C_n$. Similarly, the Sn moving average computing unit 50b adds all of the data from $S_1$ to $S_r$ and outputs the result of addition $\Sigma S_n$. As for the result of addition $\Sigma C_n$, an average value obtained by adding all the data from $C_1$ to $C_r$ and dividing the result of addition by r may be outputted as a moving average. Similarly, as for the summed value $\Sigma Sn$, an average value obtained by adding all the data from $S_1$ to $S_r$ and dividing the result of addition by r may be outputted as a moving average.

Behavior of a vector shown by those results of addition ($\Sigma C_n$, $\Sigma S_n$) is monitored in a Gaussian noise channel during being standstill or in a fading channel during shifting.

As there is found no drop in the power of a received signal or no sharp fluctuation in a carrier phase in the Gaussian noise channel, the vectors shown by the results of addition ($\Sigma C_n$, $\Sigma S_n$) fluctuate, as shown in Fig. 3, substantially within a circle shown by the dotted line about a certain point in the figure. This circle becomes larger in association with a smaller signal power-to-noise power ratio (abbreviated as S/N hereinafter). Furthermore, an average of the vector length of the results of addition ($\Sigma C_n$, $\Sigma S_n$) becomes shorter in association with the smaller S/N. The distribution of the vector angle of the results of addition ($\Sigma C_n$, $\Sigma S_n$) expanded in association with the smaller S/N, however, the average value is constant.

On the other hand, in the fading channel, power of the received signal and a carrier phase always fluctuate. When the power of the received signal drops the carrier phase fluctuates sharply (this status is abbreviated as status A hereinafter), and when the power of the received signal is increases the carrier phase fluctuates slowly (this status is abbreviated as status B hereinafter).

Fig. 4 explains the operations and the status of the vector represented by the results of addition ($\Sigma C_n$, $\Sigma S_n$) in the fading channel including "status A" and "status B". Each point in this Fig. 4 shows a data series ($\Sigma C_n$, $\Sigma S_n$), and the numerals correspond to n = 1, 2, 3, • • • n.

As shown in Fig. 4, the vector represented by the results of addition ($\Sigma C_n$, $\Sigma S_n$) changes its status in association with changes in the received signals. In the status A, the length of the vector is short, however, the vector angle is large. On the other hand, in the status B, the length of the vector is long, however, the vector angle is small.

In order to compute a vector length represented by the results of addition ($\Sigma C_n$, $\Sigma S_n$) as well as a amount of change in the vector angle, at first, the value $\Sigma C_n$ is inputted into the shift register 51a comprising a (m-r)-stage register, and the value $\Sigma S_n$ is inputted into the shift register 51b comprising a (m-r)-stage register.

When the number of stages in the shift registers 51a, 51b is an even number, data ($\Sigma C_{(m-r)/2}$, $\Sigma S_{(m-r)/2}$) having been inputted into the X=(m-r)/2-nd stage is inputted into the vector length computing unit 53 as (CV, SV). On the other hand, when the number of stages in the shift registers 51a, 51b is an odd number, data ($\Sigma C_{(m-r+1)/2}$, $\Sigma S_{(m-r+1)/2}$) having been inputted into the X=(m-r+1)/2-nd stage is inputted into the vector length computing unit 53 as (CV, SV).

The vector length computing unit 53 computes the vector length:

$$VL = (CV^2 + SV^2)^{1/2} \tag{1}$$

from the data (CV, SV) and outputs the value.

The vector phase deviation computing unit 52 receives a portion or all the data from the shift registers 51a, 51b, and computes vector phase deviation VD as described below.

When the number of stages in the shift registers 51a, 51b is an even number, then the vector phase deviation VD is computed according to the difference between the previous and next data of the data ($\Sigma C_{(m-r)/2}$, $\Sigma S_{(m-r)/2}$) having been inputted into the X=(m-r)/2-nd stage. For example, VD can be computed according to a difference for 7 symbols as expressed by equation (2a). When the number of stages in the shift registers 51a, 51b is an odd number, the vector phase deviation VD around the data ($\Sigma C_{(m-r+1)/2}$, $\Sigma S_{(m-r+1)/2}$) having been inputted into the X=(m-r+1)/2-nd stage can be computed according to the equation (2b). Here $\theta_x$= tan-1 ($\Sigma S_x/\Sigma C_x$) .

$$VD = \min\{|\theta_{(m-r)/2+3}-\theta_{(m-r)/2-3}|, 2\pi-|\theta_{(m-r)/2+3}-\theta_{(m-r)/2-3}|\}/7 \quad (2a)$$

$$VD = \min\{|\theta_{(m-r+1)/2+3}-\theta_{(m-r+1)/2-3}|, 2\pi-|\theta_{(m-r+1)/2+3}-\theta_{(m-r+1)/2-3}|\}/7 \quad (2b)$$

The vector phase deviation VD is not necessarily limited to be a difference for 7 symbols, and it may be a difference for y (= 1, 2, 3, • • •) symbol. Assuming the VD when a difference for y symbols as to be $VD_y$, then $VD_y$ can be computed through various equations described below:

(a) when the number of stages in shift registers 51a, 51b is an even number and y is an odd number, then

$$VD_y = \min\{|\theta_{(m-r)/2+(y-1)/2} - \theta_{(m-r)/2-(y-1)/2}|, 2\pi-|\theta_{(m-r)/2+(y-L)/2} - \theta_{(m-r)/2-(y-1)/2}|\}/y \quad (3a)$$

(b) when the number of stages in shift registers 51a, 51b is an odd number and y is an odd number, then

$$VD_y= \min\{|\theta_{(m-r+1)/2+(y-1)/2} - \theta_{(m-r+1)/2-(y-1)/2}|, 2\pi-|\theta_{(m-r+1)/2+(y-1)/2} - \theta_{(m+r+1)/2-(y-1)/2}|\}/y \quad (3b)$$

(c) when the number of stages in shift registers 51a, 51b is an even number and y is an even number, then

$$VD_y = \min\{|\theta_{(m-r)/2+y/2} - \theta_{(m-r)/2-y/2-1}|, 2\pi-|\theta_{(m-r)/2+y/2} - \theta_{(m-r)/2-y/2-1}|\}/y \quad (3c)$$

(d) when the number of stages in shift registers 51a, 51b is an odd number and y is an even number, then

$$VD_y = \min\{|\theta_{(m-r+1)/2+y/2} - \theta_{(m-r+1)/2-y/2-1}|, 2\pi-|\theta_{(m-r+1)/2+y/2} - \theta_{(m-r+1)/2-y/2-1}|\}/y \quad (3d)$$

Furthermore, in order to compute accurate deviation of a vector phase, an average value of some values of $VD_y$ (y=1, 2, 3, • • •) may also be utilized as the vector phase deviation VD. For example, vector phase deviation VD may be obtained as follows.

$$VD = (VD_3+VD_5+VD_7+VD_9)/4 \quad (4)$$

The filter band deciding unit 54 decides a filter bandwidth for the carrier phase estimation apparatus 2a from the vector length VL and the vector phase deviation VD based on the theory described below. In the demodulator which uses the carrier phase estimation apparatus according to Embodiment 1 of the present invention, a filter bandwidth FW as a number of data in the m-stage shift registers 21a, 21b used for carrier recovery is outputted. The filter band deciding unit 54 determines, when VL is small or VD is large, that there has occurred a drop in the power of the received signal or sharp fluctuations in the carrier phase have occurred due to fading, so that the filter band deciding unit 54 reduces the filter bandwidth FW which decides the filter band for carrier phase estimation. On the other hand, when VL is large or VD is small, the filter band deciding unit 54 determines that the power of a received signal is high and the carrier phase is stable, so that the filter band deciding unit 54 increases the filter bandwidth FW in order to increase the stability of the recovered carrier. The filter band deciding unit 54 may decide the filter bandwidth FW using any one of VL and VD. When only VL is used, the filter band deciding unit 54 controls, when VL is large, the filter bandwidth FW to a large value, and controls the filter bandwidth FW to a small value when VL is large. Further, when only VD is used, the filter band deciding unit 54 controls, when VD is small, the filter bandwidth FW to a large value, and controls the filter bandwidth FW to a small value when VD is large. However, when the filter bandwidth FW is decided using any one of VL and VD, precision of detecting a drop in the power of the received signal or detecting sharp fluctuations in the carrier phase due to fading is somewhat degraded.

As described above, the demodulator which uses the carrier phase estimating method according to embodiment 1 of the present invention detects a status of a received signal (whether there is a drop in the power of the signal or there are sharp fluctuations in the carrier phase or not) using the result of addition or an average value (moving average) for r number of data in the past having been converted to a non-modulation signal through non-linear processing, and decides a filter bandwidth FW as a number of data used for carrier phase estimation according to the detected signal so that the effects described below are be achieved. In addition, although a circuit scale becomes large, effects 1 ~ 5 described below can also be obtained even when $\alpha$ is controlled in proportion to a size of a filter bandwidth FW as a number of data by using weightage units 22a, 22b in the carrier phase estimation apparatus shown in the conventional technology instead of the data output control unit 22c and 22d.

Effect 1: since a band of a filter for carrier recovery is widened only when the power of the received signal drops or only when the carrier phase fluctuates sharply, compatibility between excellent BER performance in the Gaussian noise transmission path and excellent BER performance in the fading noise transmission path can be realized.

Effect 2: Since the status of the received signal (a drop in the power of the received signal or sharp fluctuations in the carrier phase) is detected by using result of addition or an average value (moving average) of r number of received data series having been converted to a non-modulation signal, the status of the received signal can be grasped with high precision within a shorter period even with a small circuit.

Effect 3: The carrier phase is estimated by automatically widening the filter band for estimating a carrier phase (in Embodiment 1, a filter bandwidth FW is reduced) when the power of the received signal drops or when the carrier phase fluctuates sharply, and by automatically narrowing the filter band for estimating a carrier phase when the received signal is stable (in Embodiment 1, a filter bandwidth FW is increased), so that it is possible to achieve a quick re-pull-in of a carrier phase at the time of recovering from shadowing (a status where a signal is cut off due to a shadow of a building and a signal is received again from its asynchronous carrier phase) and stabilization of the carrier phase after the re-pull-in. Similarly, when a signal is received in a status where an incoming time of a burst of an incoming signal (burst signal) can not be identified (capture of a burst signal), the demodulator which uses the carrier phase estimation apparatus according to Embodiment 1 of the present invention is continuously operated, which allows a quick re-pull-in of a carrier phase to a burst signal and high stability of the carrier phase after the re-pull-in to be achieved. Fig. 5 shows an example of a carrier phase estimating operation at the time of recovery from shadowing according to Embodiment 1 of the present invention. Fig. 6 shows an example of a carrier phase estimating operation at the time of capturing a burst signal according to Embodiment 1 of the present invention.

Effect 4: Since a filter band is changed by using the data output control unit 22c, 22d each capable of being configured with a simple XOR element instead of multiplication processing in the weightage unit 22a, 22b for the demodulator which uses the conventional type of carrier phase estimation apparatus, a circuit scale of the data output control unit 22c, 22d can be made smaller.

Effect 5: Even when removal of carrier frequency deviation under AFC (Automatic Frequency Control) is insufficient, VD is becomes larger. VL becomes smaller, and a filter bandwidth FW is controlled to be a smaller value, which allows BER performance of differential detection scheme can be satisfied. By using the carrier phase estimation apparatus shown in the conventional technology, the BER performance is largely degraded due to carrier frequency deviation.

In the demodulator which uses the carrier phase estimation apparatus according to Embodiment 1 of the present invention, the DQPSK modulation system has been used. However, any system may be used on condition that a $2^N$ (N = 1, 2, 3, • • •) value phase modulating system which is subjected to differential encoding such as sharing and using of differential encoding and a BPSK (DBPSK) modulating (binary phase modulation) system or the like. The differences in this case are as described below.

(A) A multiplication processing in the non-linear converting unit 20 is changed from 4 multiplication to $2^N$ multiplication.

(B) Computation of a carrier phase in the carrier phase computing unit 24a is changed from $\theta C_n = (1/4 \times \tan^{-1} (\Sigma S_n/\Sigma C_n) + \pi/4) \bmod 2\pi$ to $\theta C_n = (1/2^N \times \tan^{-1} (\Sigma S_n/\Sigma C_n) + \pi/2^N) \bmod 2\pi$ .

(C) Determination of data in the data determining unit 4 is changed from determination using four determination axes of $(\theta C_n + k\pi/2) \bmod 2\pi$ ($k \in \{0, 1, 2, 3\}$) in total to determination using $2^N$ determination axes of $(\theta C_n + k \times 2\pi/2^N) \bmod 2\pi$ ($k \in \{0, 1, 2, \cdots, 2^N-1\}$) in total.

In a carrier phase estimation apparatus and a demodulator which uses this carrier phase estimation apparatus according to Embodiment 2, a reduction in the circuit scale and power consumption of the demodulator can be realized in addition to the same effect as that in the carrier phase estimation apparatus and the demodulator which uses the carrier phase estimation apparatus according to Embodiment 1. Furthermore, by realizing computing processing with a microprocessor, the processing can be speeded up. The demodulator which uses the carrier phase estimation apparatus according to Embodiment 2 of the present invention estimates a carrier phase using only phase information for a received signal being subjected to π/4-shift QSPK modulation that is in widespread use among PDC and PHS or the like, and demodulates data through coherent detection and differential decoding.

The carrier phase estimation apparatus and the demodulator which uses this carrier phase estimation apparatus according to Embodiment 2 of present invention is explained here with reference to the related drawings. Fig. 7 is a block diagram showing configuration of the demodulator which uses the carrier phase estimation apparatus according to Embodiment 2 of the present invention.

In Fig. 7, designated at the reference numeral 6 is a limiter which amplifies the received IF signal to a specified width. Designated at the reference numeral 7 is a phase detector which compares the received IF signal amplified to a specified width with the phase of a local signal of the same frequency as that of the received IF signal and outputs a result of the comparison as baseband phase data. Designated at the reference numeral 8 is a -π/4-phase rotating unit which rotates the phase of the baseband phase data outputted by the phase detector 7 by -π/4 for each symbol and outputs a phase data series with a phase shifted for each symbol. Designated at the reference numeral 9 is a π/4-phase rotating unit which rotates the phase of the estimated value of the carrier phase outputted by the carrier phase computing unit 24a by π/4 for each symbol. Designated at the reference numeral 20a is a non-linear processor which removes a modulation component from the phase data series with a phase shifted for each symbol outputted by the -π/4-phase rotating unit 8. Designated at the reference numeral 2b is a carrier phase estimation apparatus which receives the baseband phase data outputted by the phase detector 7, computes a carrier phase and outputs the computed carrier phase as an estimated value of the carrier phase. Designated at the reference numeral 3a is a phase data delaying unit which delays the baseband phase data and outputs the data as baseband phase delay data. Designated at the reference numeral 4a is a data determining unit which generates the axes of determination from the estimated value of the carrier phase subjected to π/4-phase rotation in the π/4-phase rotating unit 9, determines the baseband phase data according to the generated axes of determination, and outputs the demodulation data. Designated at the reference numeral at 5a is a filter band computing unit which computes a value that decides a band of the filter for the carrier phase estimation from the data as far as for the r-th stage of the data inputted into the m-stage shift registers 21a, 21b and outputs the value. Designated at the reference numeral 24a is a carrier phase computing unit which converts the coordinates of the data outputted by the first moving average computing unit 25a, computes the estimated value of the carrier phase and outputs the computed value of the carrier phase.

Fig. 8 shows a configuration of the filter band computing unit 5a for the demodulator which uses the carrier phase estimation apparatus according to Embodiment 2 of the present invention. In Fig. 8, the reference numeral 52a indicates a vector phase deviation computing unit which computes the deviation of the vector phase with addition and subtraction.

In Fig. 7 and Fig. 8, same reference numerals are assigned to the components corresponding to those in the demodulator which uses the carrier phase estimation apparatus shown based on the conventional technology as well as in Embodiment 1, and description thereof is omitted herein.

Operation of the demodulator which uses the carrier phase estimation apparatus according to Embodiment 2 of the present invention are described below.

The demodulator which uses the carrier phase estimation apparatus based on the conventional technology as well as in Embodiment 1 which use the amplitude information of the received signal requires an AGC (Automatic Gain Control) linear amplifier provided at the previous stage of the demodulator to prevent the signal amplitude from exceeding a range of an effective bit number in an A/D converter because of large changes in the signal amplitude due to fading or the like. Both, the AGC linear amplifier and the A/D converter have a large circuit scale and large power consumption. Therefore, the demodulator which uses the carrier phase estimation apparatus according to Embodiment 2 of the present invention has configuration in which the limiter 6 is provided at the previous stage of the demodulator, so that the need for providing a AGC linear amplifier or a A/D converter is eliminated. However, the amplitude of the IF signal received by the limiter 6 is amplified to obtain a rectangular signal so that the amplitude information in the signal is completely lost. Therefore, in the demodulator which uses the carrier phase estimation apparatus according to Embodiment 2 of the present invention, data is demodulated by using phase information of a received signal.

The phase of the received IF signal whose amplitude has been amplified to a specified amplitude is compared with the phase of the local signal of the same frequency in the phase detector 7. The phase detector 7 outputs a result of the comparison as baseband phase data $\theta_n$(n = 0, 1, 2, 3, • • •). As a phase detection method, there may be used, for instance, the phase detection method described in the reference "Digital Differential Detection Scheme for DPSK using Digital Frequency Conversion" (by Sano, Kojima, Miyake, and Fujino in 1993-Spring meeting of Institute of Electronics, Information and Communication Engineers, B-309).

The baseband phase data $\theta_n$ outputted from the phase detector 7 is inputted into the carrier phase estimation apparatus 2a and the phase data delaying unit 3a.

In Embodiment 2, because a case in which a π/4-shift QPSK-modulation signal is received is assumed, phase rotation of (-π/4) [rad] is given to the baseband phase data $\theta_n$ for each symbol in the -π/4-phase rotating unit 8 of the carrier phase estimation apparatus 2b as shown in equation (5),

$$P_n = (\theta_n - \pi \times n/4) \bmod 2\pi \quad (5)$$

where (n = 0, 1, 2, 3, • • •).

Accordingly, $\theta_n$ to be shifted to each phase {± π/4, ± 3π/4} for each symbol is converted to a phase data series $P_n$ to be shifted to each phase {0, ± π/2, π} for each symbol.

The non-linear processor 20a removes a modulation component from a phase $P_n$. As a method of removing a modulated component, there is a method of removing a modulated component by multiplying the phase by 4 described below.

$$P4_n = (4 \times P_n) \bmod 2\pi \quad (6)$$

Then, the non-linear processor 20a outputs $(C_n, S_n) = (\cos(P4_n), \sin(P4_n)$ from the 4-multiplied phase data $P4_n$.

Data $(C_n, S_n)$ after removal of a modulation component is inputted, similarly to Embodiment 1, into the m-stage shift registers 21a, 21b of the first moving average computing unit 25a respectively. The operation thereafter in the carrier phase estimation apparatus 2b is the same as that in Embodiment 1 described above, and a carrier phase estimated value $\theta C_n$ is outputted by the data output control units 22c, 22d, adders 23a, 23b, and carrier phase computing unit 24a in the carrier phase estimation apparatus 2b.

The filter band computing unit 5a computes, similarly to that in Embodiment 1, a filter bandwidth FW for deciding a filter band used for estimating the carrier phase from the data $(C_1 \sim C_r, S_1 \sim S_r)$ for the 1st to r-th stage among data $(C_1 \sim C_m, S_1 \sim S_m)$ inputted in the m-stage shift registers 21a, 21b, and outputs the filter bandwidth FW. A difference in the operation of the filter band computing unit 5a with respect to that described in Embodiment 1 above is only the operation in the vector phase deviation computing unit 52a.

The $\tan^{-1}$ processing used in the vector phase deviation computing unit 52 according to Embodiment 1 requires a large amount of computation (which means a large number of components). There, the vector phase deviation computing unit 52a computes a vector phase deviation VD represented by $(\Sigma C_n, \Sigma S_n)$ by the computing processing and computing method that require a less amount of computation (less number of components). Fig. 9 shows an example of computing a vector phase deviation VD in Embodiment 2 described above.

When a phase deviation between two vectors: $(\Sigma C_3, \Sigma S_3)$ and $(\Sigma C_7, \Sigma S_7)$ shown in Fig. 9 is to be calculated, then $\Delta\theta$ shown in Fig. 9 is taken as VD in Embodiment 1. However, in Embodiment 2, the vector phase deviation VD is taken to be a distance between the point $(\Sigma C_3, \Sigma S_3)$ and the point $(\Sigma C_7, \Sigma S_7)$. In the example shown in Fig. 9, VD becomes,

$$VD = (A^2 + B^2)^{1/2} \quad (7a)$$

The equation described below may be used in order to reduce the amount of computation:

$$VD = A + B \quad (7b)$$

Thus, the vector phase deviation VD can be computed with a single addition.

Description is made hereinafter for details of the method of computing VD based on equation (7b).

Assuming that VD in a case of carrying out a difference for y (y=1, 2, 3, • • •) symbol to be $VD_y$, then $VD_y$ can be computed through various equations as follows:

(a) when the number of stages in the shift registers 51a, 51b is an even number and y is an odd number, then

$$VD_y = |\Sigma C_{(m-r)/2+(y-1)/2} - \Sigma C_{(m-r)/2-(y-1)/2}| + |\Sigma S_{(m-r)/2+(y-1)/2} - \Sigma S_{(m-r)/2-(y-1)/2}| \quad (8a)$$

(b) when the number of stages in the shift registers 51a, 51b is an odd number and y is an odd number, then

$$VD_y = |\Sigma C_{(m-r+1)/2+(y-1)/2} - \Sigma C_{(m-r+1)/2-(y-1)/2}| + |\Sigma S_{(m-r+1)/2+(y-1)/2} - \Sigma S_{(m-r+1)/2-(y-1)/2|} \quad (8b)$$

(c) when the number of stages in the shift registers 51a, 51b is an even number and y is an even number, then

$$VD_y = |\Sigma C_{(m-r)/2+y/2} - \Sigma C_{(m-r)/2-y/2-1}| + |\Sigma S_{(m-r)/2+y/z} - \Sigma S_{(m-r)/2-y/2-1}| \quad (8c)$$

(d) when the number of stages in the shift registers 51a, 51b is an odd number and y is an even number, then

$$VD_y = |\Sigma C_{(m-r+1)/2+y/2} - \Sigma C_{(m-r+1)/2-y/2-1}| + |\Sigma S_{(m-r+1)/2+y/2} - \Sigma S_{(m-r+1)/2-y/2-1}| \quad (8d)$$

Furthermore, in order to compute accurate deviation of a vector phase similarly to Embodiment 1, an average value of some values of $VD_y$ (y = 1, 2, 3, • • •) may also be used vector phase deviation VD. For example, VD may be calculated according to the following equation.

$$VD = (VD_3+VD_5+VD_7+VD_9)/4 \quad (9)$$

Thus, the vector phase deviation VD can be computed only through addition for three times and 2-bit shift computation.

As described above, the filter band computing unit 5a outputs a filter bandwidth FW similarly to that in Embodiment 1 using the computed VD and the VL outputted from the vector length computing unit 53.

The π/4-phase rotating means 9 gives π/4-shift phase rotation for one symbol to the estimated value of the carrier phase $\theta C_n$ outputted from the carrier phase computing unit 24a as shown in equation (10),.

$$\theta S_n = (\theta C_n + n\pi/4) \bmod 2\pi \quad (10)$$

where (n = 0, 1, 2, • • •).

The phase data delaying unit 3a delays the baseband phase data $\theta_n$ {n = 0, 1, 2, 3, • • •} for (m+1)/2 symbol and outputs the delayed data as baseband phase delay data $\theta_j$ (j = n-(m+1)/2) .

The data determining unit 4a generates four axes in total of determination of $(\theta S_n + k\pi/2) \bmod 2\pi$ ($k \in \{0, 1, 2, 3\}$) from the carrier phase estimated value $\theta S_n$ having been subjected to π/4-shift phase rotation, determines the baseband phase data $Q_j$ according to the generated axes of determination, and outputs demodulation data.

Fig. 10 explains the operation of the demodulator which uses the carrier phase estimation apparatus according to Embodiment 2 of the present invention.

For example, as shown in Fig. 10(a), in the system which carries out π/4-shift QPSK modulation by shifting the phase by π/4 if the transmission data is (0, 0), by shifting the phase by 3π/4 if the transmission data is (0, 1), by shifting the phase by -3π/4 if the transmission data is (1, 1), and by shifting the phase by -π/4 if the transmission data is (1, 0), when $\theta S_n$ and $\theta_j$ shown in Fig. 10(b) are to be computed, it is determined that the data before differential decoding is (0, 1) according to four axes in total of the axis corresponding to $\theta S_n$ and the axes corresponding to three dotted lines. Then the data determining unit 4a subjects the data after the determination to differential decoding to compute demodulation data.

As described above, with the demodulator which uses the carrier phase estimation apparatus according to Embodiment 2 of the present invention, in addition to the effects 1 to 5 described in Embodiment 1, the effects described below can be achieved.

Effect 6: The demodulator which uses the carrier phase estimation apparatus according to Embodiment 2 of the present invention can be realized only with phase information, so that the need for providing an AGC amplifier or an A/D converter both of which have a large circuit scale and large power consumption is eliminated. Therefore, in the demodulator of the present invention circuit scale and power consumption can be minimized by providing a limiter (amplifier) which has a simple configuration in the previous stage of the demodulator.

Effect 7: As an amount of computation (procedure) of a vector phase deviation VD can be reduced, a circuit scale of the vector phase deviation computing unit 52a can further be reduced as compared to that of the demodulator which uses the carrier phase estimation apparatus according to Embodiment 1 of the present invention. Further, the processing can be speeded up when realizing the above mentioned computing processing with a microprocessor or the like.

In the amplifier which use the carrier phase estimation apparatus according to Embodiment 2 of the present invention the filter bandwidth FW is computed using both the VL and VD. However, the filter bandwidth FW may be computed using either VL or VD. In addition, although there has been disclosed a case in which the π/4-shift QPSK modulation system is used, by removing the -π/4-phase rotating unit 8 and the π/4-phase rotating unit 9 and setting $P_n = \theta_n$ and $\theta S_n = \theta C_n$, a system in which the differential encoding and QPSK (DQPSK) modulation system are concurrently used can be easily realized.

Furthermore, a differentially-encoded $2^N$ (N=1, 2, 3, • • •) value phase modulation system such as a system concurrently using differential encoding and a BPSK (DBPSK) (binary phase modulation) can be adaptable to any system. The differences in this case are removal of the -π/4-phase rotating unit 8 and the π/4-phase rotating unit 9, changing $P_n = \theta_n$ and $\theta S_n = \theta C_n$, and the differences (A) to (C) described in Embodiment 1.

A carrier phase estimation apparatus and a demodulator which uses the carrier phase estimation apparatus according to Embodiment 3 of the present invention can realize the same effects as those of the carrier phase estimation apparatus and demodulator which uses the carrier phase estimation apparatus according to Embodiment 1 described above by carrying out absolute coherent detection of a signal. Operation of the demodulator which uses the carrier phase estimation apparatus according to Embodiment 3 is described below taking a case of demodulating a QPSK-modulation signal as an example.

Fig. 11 is a block diagram showing configuration of the demodulator which uses the carrier phase estimation apparatus according to Embodiment 3 of the present invention.

In Fig. 11. designated at the reference numeral 10 is a UW detector which previously prepares possible unique word (abbreviated as UW hereinafter) patterns when data is determined using the estimated value of the carrier phase, computes a correlation between the determined data from the data determining unit 4a and each of the UW patterns, detects a UW pattern indicating the highest correlation when the UW pattern is received and outputs the information regarding this UV pattern. Designated at the reference numeral 11 is a data correction unit which corrects the data outputted from the data determining unit 4 using the information outputted from the UW detector 10 and outputs the corrected data as a demodulation data.

In Fig. 11, the same reference numerals are assigned to components corresponding to those based on the conventional technology as well as of Embodiments 1 and 2, and description thereof is omitted herein.

Operations of the demodulator which uses a phase estimation method according to Embodiment 3 of the present invention is described below.

Difference between the operations in Embodiment 3 and the operations in Embodiment 1 is to remove the further the phase uncertainty from the data outputted from the data determining unit 4 with the UW detector 10 and data correction unit 11.

The estimated value of the carrier phase $\theta C_n$ outputted from the carrier phase estimation apparatus 2a may possibly has four values in total of $(\theta C_n + k\pi/2) \bmod 2\pi$ (k = 0, 1, 2, 3) which has phase uncertainty therein, so that the phase uncertainty is removed by differential decoding in the differential encoding and QPSK modulation system shown in Embodiment 1 and in the $\pi$/4-shift QPSK modulation system shown in Embodiment 2. Embodiment 3 assumes a system which use a QPSK modulation system which does not perform differential encoding and the uncertainty in the carrier phase is removed according to UW detection information.

Operations of the demodulator which uses the carrier phase estimation apparatus according to Embodiment 3 of the present invention is described below.

The demodulator which uses the carrier phase estimation apparatus according to Embodiment 3 of the present invention is effective in a system with known symbols such as unique words inserted into data.

The UW detector 10 previously prepares possible four UW patterns ($UW_0 \sim UW_3$) when data is determined using each of the carrier phase estimated values of $(\theta C_n + k\pi/2) \bmod 2\pi$ (k=0, 1, 2, 3) and computes a correlation between the data determined in the data determining unit 4a and each of the UW patterns. Then, the UW detector 10 detects $UW_k$ (k = 0, 1, 2, 3) indicating the highest correlation when the UW pattern is received to output the information indicating the number k (k = {0, 1, 2, 3}) of the pattern.

The data correction unit 11 corrects data outputted from the data determining unit 4 using information for k outputted from the UW detector 10 to output the corrected data as demodulation data.

As described above, with the demodulator which uses the carrier phase estimation apparatus according to Embodiment 3 of the present invention, in addition to the effects 1 to 5 described in Embodiment 1, the effect described below can be achieved.

Effect 8: The demodulator which uses the carrier phase estimation apparatus according to Embodiment 3 of the present invention can be applied to the QPSK modulation system which does not perform differential encoding because this demodulator removes the uncertainty from the carrier phase by using the UW detection information.

The demodulator which uses the carrier phase estimation apparatus according to Embodiment 3 of the present invention computes a filter bandwidth FW using both VL and VD. However, the demodulator may be configured so as to compute the filter bandwidth FW using either VL or VD. Furthermore, although there has been described a case in which the QPSK modulation system is used as the modulation system, any system based on a $2^N$ (N = 1, 2, 3, • • •) value phase modulation system such as a BPSK (binary phase modulation) system may be used. The differences in this case are the same as the differences (A) to (C) described in Embodiment 1.

With the first carrier phase estimation apparatus according to the present invention, a status of the received signal such as a drop in the power of the received signal or sharp fluctuations in its carrier phase are detected using a result of addition or an average value (moving average) of a r number of received data series converted to non-modulated signals. Therefore, the status of the signal can be grasped at a high precision within a shorter period of time with a circuit having a smaller scale.

With the second to fourth carrier phase estimation apparatuses according to the present invention, in addition to the effects achieved with the first carrier phase estimation apparatus, the following effect can additionally be achieved. Namely, as a band of a filter for carrier recovery is widened only when there is a drop in the power of the received signal or there are sharp fluctuations in the carrier phase. compatibility of excellent BER performance between a Gaussian noise channel and a fading channel can be effected.

With the fifth carrier phase estimation apparatus according to the present invention, in addition to the effects achieved with the first carrier phase estimation apparatus, the following effect can additionally be achieved. Namely, as a filter band is changed with a data output control unit which can be realized with simple XOR element, the scale of the circuit can be reduced further.

With the sixth and seventh carrier phase estimation apparatuses according to present invention, in addition to the effects achieved with the third and fourth carrier phase estimation apparatuses, the following effect can additionally be achieved. Namely, as a y-symbol difference value or z number of y-symbol difference values out of the y-symbol difference value are utilized as a vector phase deviation, the phase deviation can be computed with high precision.

With the eighth carrier phase estimation apparatus according to the present invention, in addition to the effects achieved with the third and fourth carrier phase estimation apparatuses, the following effect can additionally be achieved. Namely, as the eighth carrier phase estimation apparatus according to the present invention is realized by a processing method of reducing an amount of computation (procedure) of a vector phase deviation, the scale of the circuit can further be reduced as compared to that of the demodulator which uses the first carrier phase estimation apparatus. Furthermore, by realizing the computing processing using a microprocessor or the like, the processing can be speeded up.

With the ninth carrier phase estimation apparatus according to the present invention, in addition to the effects achieved with the first carrier phase estimation apparatus, the following effect can additionally be achieved. Namely, as the eighth carrier phase estimation apparatus according to the present invention uses only the phase information, the need of providing an AGC amplifier or an A/D converter can be eliminated, which allows the scale of the circuit to be reduced.

With the demodulator which uses the first carrier phase estimation apparatus according to the present invention, as a band of a filter for carrier recovery is widened only when there is a drop in the power of the received signal or there are sharp fluctuations in the carrier phase, so that compatibility of excellent BER performance between a Gaussian noise channel and a fading channel can be effected.

With the demodulator which uses the second carrier phase estimation apparatus according to the present invention, in addition to the effects achieved with the demodulator which uses the first carrier phase estimation apparatus, the following effect can additionally be achieved. Namely, as the demodulator which uses the second carrier phase estimation apparatus according to the present invention uses only the phase information, the need of providing an AGC amplifier or an A/D converter which have a large circuit scale and large power consumption can be eliminated. This which allows the scale of the demodulator to be minimized and power consumption to be reduced by making it simple configuration with a limiter (amplifier) provided in the previous stage of the demodulator.

With the demodulator which uses the third carrier phase estimation apparatus according to the present invention, in addition to the effects achieved with the demodulator which uses the first carrier phase estimation apparatus, the following effect can additionally be achieved. Namely, the demodulator which uses the third carrier phase estimation apparatus according to the present invention can be applied to the QPSK modulation system which does not perform differential encoding because the demodulator removes uncertainty from the carrier phase by using UW detection information.

FIELDS OF INDUSTRIAL APPLICATIONS

As described above, the carrier phase estimation apparatus and the demodulator which uses this carrier phase estimation apparatus according to the present invention can realize excellent BER performance in both a Gaussian noise channel and a fading channel with a small circuit scale. Hence, the carrier phase estimation apparatus and the demodulator which uses this carrier phase estimation apparatus according to the present invention are useful in various types of digital radio communication systems.

**Claims**

**1.** A carrier phase estimation apparatus comprising:

a non-linear processor for outputting a non-modulated complex data for m (m = 1, 2, 3, • • •) symbol obtained by carrying out non-linear conversion of the received baseband data having been subjected to $2^N$ (N = 1, 2, 3, • • •) value phase modulation from which a modulation component has been removed;
a first moving average computing unit for adding the non-modulated complex data or computing an average of the non-modulated complex data and outputting the result of addition or the average as a first moving average;
a filter band computing unit for controlling a band of said first moving average computing unit using the non-modulated complex data for r (r = 1, 2, 3, • • •) symbol; and
a carrier phase computing unit for computing a vector angle represented by the first moving average, computing a carrier phase by dividing the computed vector angle by $2^N$, and outputting the computed carrier phase value as an estimated value of the carrier phase.

**2.** The carrier phase estimation apparatus according to Claim 1; wherein said filter band computing unit comprises:

a second moving average computing unit for adding the non-modulated complex data for r symbol in the past or computing an average of the non-modulated complex data for r symbol in the past and outputting the result of addition or the average as a second moving average;
a vector length computing unit for computing a length of a vector represented by the second moving average and outputting the computed length of the vector as a vector length; and

a filter band deciding unit for outputting a band-controlled signal indicating that a band of said first moving average computing unit has been widened when the vector length is short and that the band of said first moving average computing unit has been narrowed when the vector length is long.

**3.** The carrier phase estimation apparatus according to Claim 1; wherein said filter band computing unit comprises:

a second moving average computing unit for adding the non-modulated complex data for r symbol in the past or computing an average of the non-modulated complex data for r symbol in the past and outputting the result of addition or the average as a second moving average;
a vector phase deviation computing unit for computing a phase deviation of a vector angle represented by the second moving average and outputting the computed phase deviation as a vector phase deviation; and
a filter band deciding unit for outputting a band-controlled signal indicating that a band of said first moving average computing unit has been widened when the vector phase deviation is large and that the band of said first moving average computing unit has been narrowed when the vector phase deviation is small.

**4.** The carrier phase estimation apparatus according to Claim 3; wherein said vector phase deviation computing unit computes a specified y (y = 1, 2, 3, • • •) symbol difference value of the vector angle represented by the second moving average, and outputs the computed y symbol difference value as the vector phase deviation.

**5.** The carrier phase estimation apparatus according to Claim 3; wherein said vector phase deviation computing unit outputs an average of z ($1 \leq z \leq y$) number of difference information out of the y number of difference information in total of specified y-symbol difference value from one-symbol difference value of a vector represented by the second moving average as the vector phase deviation.

**6.** The carrier phase estimation apparatus according to Claim 3; wherein said vector phase deviation computing unit adds an absolute value of a data obtained by differentiating the in-phase component of the second moving average for y symbol to an absolute value of a data obtained by differentiating the orthogonal component of the second moving average for y symbol, and outputs the result of addition as the vector phase deviation.

**7.** The carrier phase estimation apparatus according to Claim 1; wherein said filter band computing unit comprises:

a second moving average computing unit for adding the non-modulated complex data for r symbol in the past or computing an average of the non-modulated complex data for r symbol in the past and outputting the result of addition or the average as a second moving average;
a vector length computing unit for computing a length of a vector represented by the second moving average and outputting the computed length of the vector as a vector length;
a vector phase deviation computing unit for computing a phase deviation of a vector angle represented by the second moving average and outputting the computed phase deviation as a vector phase deviation; and
a filter band deciding unit for outputting a band-controlled signal indicating that a band of said first moving average computing unit has been widened when the vector length is short or the vector phase deviation is large and that the band of said first moving average computing unit has been narrowed when the vector length is long and the vector length is small.

**8.** The carrier phase estimation apparatus according to Claim 7; wherein said vector phase deviation computing unit computes a specified y (y = 1, 2, 3, • • •) symbol difference value of the a vector angle represented by the second moving average, and outputs the computed y symbol difference value as the vector phase deviation.

**9.** A carrier phase estimation apparatus according to Claim 7; wherein said vector phase deviation computing unit outputs an average of z ($1 \leq z \leq y$) number of difference information out of the y number of difference information in total of specified y-symbol difference value from one-symbol difference value of a vector represented by the second moving average as the vector phase deviation.

**10.** A carrier phase estimation apparatus according to Claim 7; wherein said vector phase deviation computing unit adds an absolute value of a data obtained by differentiating the in-phase component of the second moving average for y symbol to an absolute value of a data obtained by differentiating the orthogonal component of the second moving average for y symbol, and outputs the result of addition as the vector phase deviation.

**11.** The carrier phase estimation apparatus according to Claim 1; wherein said first moving average computing unit comprises:

a m-stage shift register for accumulating the non-modulated complex data for m symbol in the past;
a data output control unit for outputting data for f ($1 \leq f \leq m$) symbol with the non-modulated complex data for m/2-nd symbol in the past as a center out of the accumulated non-modulated complex data for m symbol as data required for estimation of the carrier phase, based on the band-controlled signal outputted from said filter band computing unit for controlling a band of said first moving average computing unit; and
an adder for adding the data required for estimation of the carrier phase or computing an average of the data required for estimation of the carrier phase, and outputting the result of addition or the average as the first moving average.

**12.** The carrier phase estimation apparatus according to Claim 1; wherein said non-linear processor uses only phase information of the received baseband signal subjected to $2^N$ value phase modulation, and outputs the non-modulated complex data obtained by carrying out non-linear conversion of the phase information to remove a modulated component therefrom.

**13.** A demodulator which uses a carrier phase estimation apparatus comprising:

a quasi-synchronicity detector for subjecting a received IF signal having been subjected to $2^N$ (N = 1, 2, 3, • • •) value phase modulation to quasi-synchronicity detection, and converting the detected signal into a received baseband signal;
a non-linear processor for outputting non-modulated complex data obtained by carrying out non-linear conversion with respect to the received baseband signal having been subjected to $2^N$ value phase modulation in order to remove a modulated component therefrom;
a first moving average computing unit for adding the non-modulated complex data or computing an average of the non-modulated complex data and outputting the result of addition or the average as a first moving average;
a carrier phase computing unit for computing a vector angle represented by the first moving average, computing a carrier phase by dividing the computed vector angle by $2^N$, and outputting the computed carrier phase value as an estimated value of the carrier phase;
a filter band computing unit for controlling a band of said first moving average computing unit using the non-modulated complex data for r symbol in the past out of the non-modulated complex data;
a data delaying unit for delaying the received baseband signal outputted from said quasi-synchronicity detector; and
a data determining unit for determining the delayed received baseband signal using the estimated value of the carrier phase outputted by said carrier phase estimating unit, and subjecting the determined data to differential decoding in order to obtain demodulation data.

**14.** The demodulator which uses a carrier phase estimation apparatus according to Claim 13; wherein said quasi-synchronicity detector comprises:

a limiter for amplifying the received IF signal subjected to $2^N$ value phase modulation to a specified amplitude; and
a phase detector for detecting a phase of the received IF signal amplified to a specified amplitude by said limiter and outputting the phase of the detected received IF signal as a received baseband phase signal; wherein said non-linear processor outputs the non-modulated complex data obtained by carrying out non-linear conversion of phase information for the received baseband signal having been subjected to $2^N$ value phase modulation in order to remove a modulated component therefrom;
said data delaying unit delays phase data for a received baseband signal outputted from said phase detector; and
said data determining unit determines phase data for the delayed received baseband signal using the estimated value of the carrier phase as output from said carrier phase estimating unit, and subjects the determined data to differential decoding in order to obtain demodulation data.

**15.** The demodulator which uses a carrier phase estimation apparatus according to Claim 13; wherein said quasi-synchronicity detector carries out quasi-synchronicity detection of the received IF signal having been subjected to $2^N$ value phase modulation in order to convert the detected signal to the received baseband data;

said data determining unit determines the delayed received baseband data using the estimated value of the carrier phase as output from said carrier phase estimating unit, and outputs the determined data; and

said demodulator further comprises:

a unique word detector for computing correlation in $2^N$ unique word patterns which may occur due to phase uncertainty for the determination data in order to output a phase uncertainty removal, signal indicating with which unique word pattern, of the $2^N$ unique word patterns, the data is detected in detection of a unique word; and

a data correction unit for correcting the determined data using the phase uncertainty removal signal in order to remove the phase uncertainty therefrom, and outputting the data from which the phase uncertainty is removed as demodulation data.

FIG.1

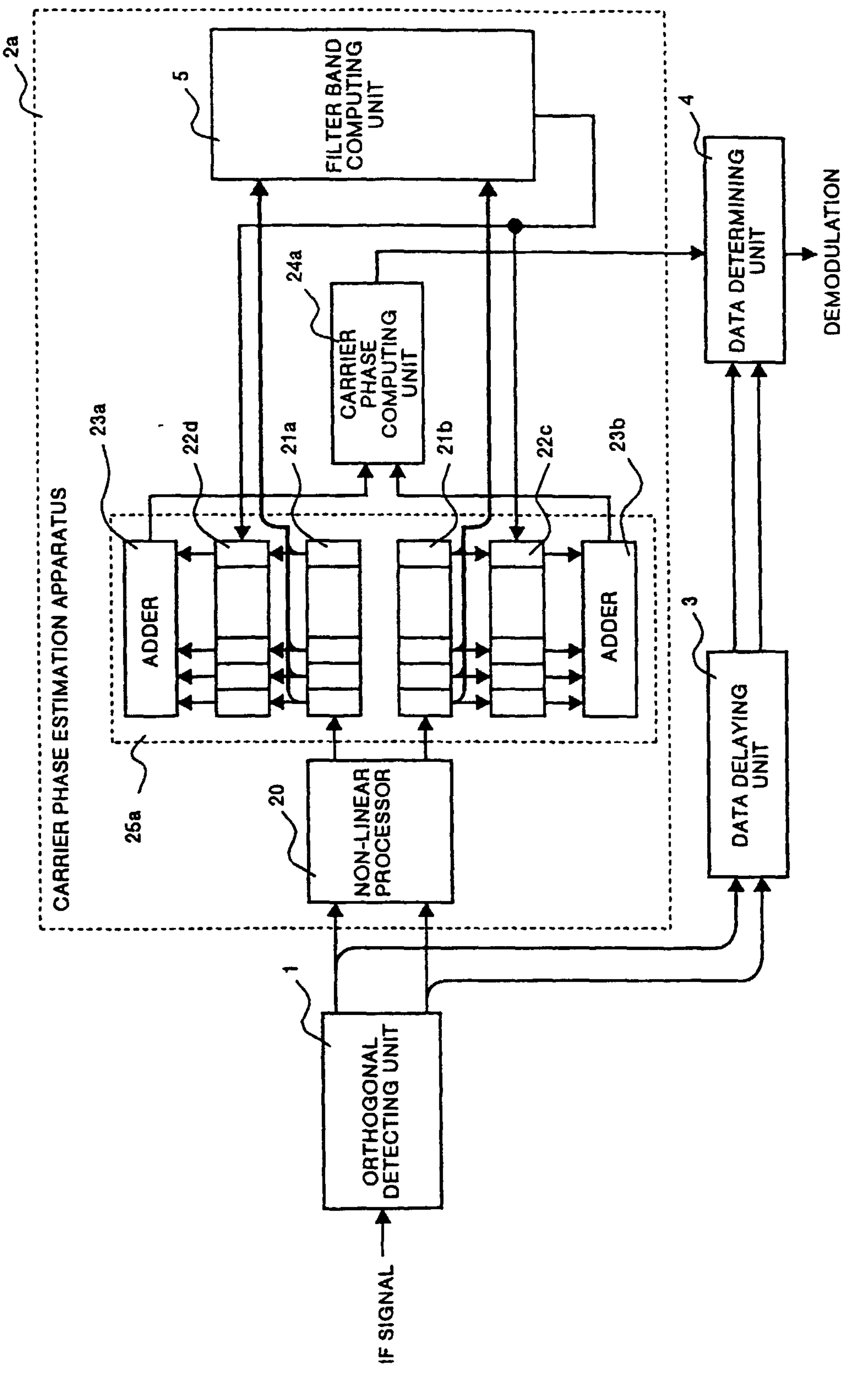
2a
CARRIER PHASE ESTIMATION APPARATUS
5
FILTER BAND COMPUTING UNIT
24a
CARRIER PHASE COMPUTING UNIT
23a
22d
21a
21b
22c
23b
ADDER
ADDER
25a
20
NON-LINEAR PROCESSOR
1
ORTHOGONAL DETECTING UNIT
IF SIGNAL
3
DATA DELAYING UNIT
4
DATA DETERMINING UNIT
DEMODULATION DATA

FIG.2

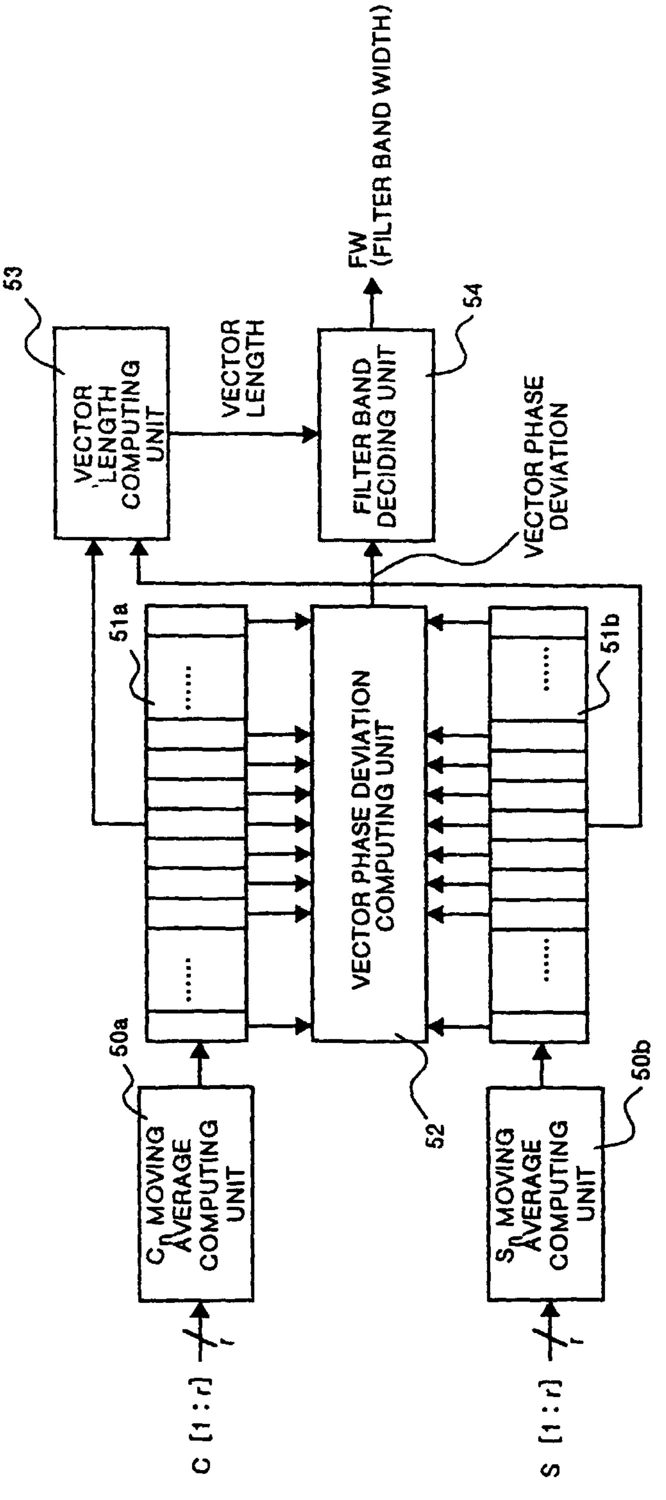
53
VECTOR LENGTH COMPUTING UNIT
VECTOR LENGTH
FILTER BAND DECIDING UNIT
54
FW (FILTER BAND WIDTH)
VECTOR PHASE DEVIATION
VECTOR PHASE DEVIATION
51a
VECTOR PHASE DEVIATION COMPUTING UNIT
51b
50a
C MOVING AVERAGE COMPUTING UNIT
52
50b
S MOVING AVERAGE COMPUTING UNIT
C [1 : r]
S [1 : r]
r
r

FIG.3

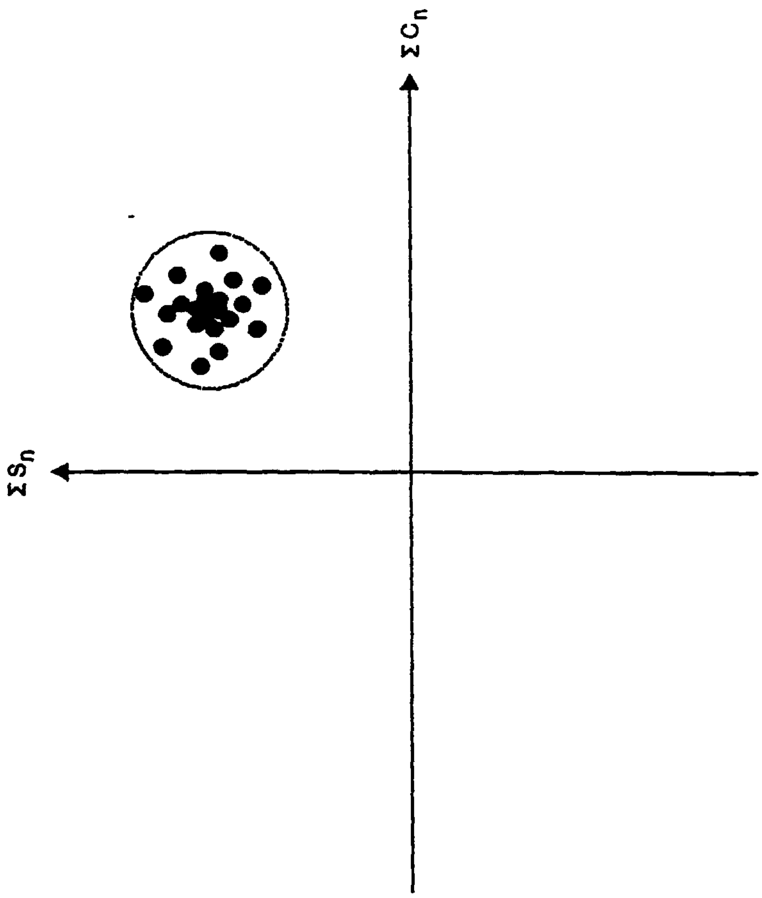

FIG.4

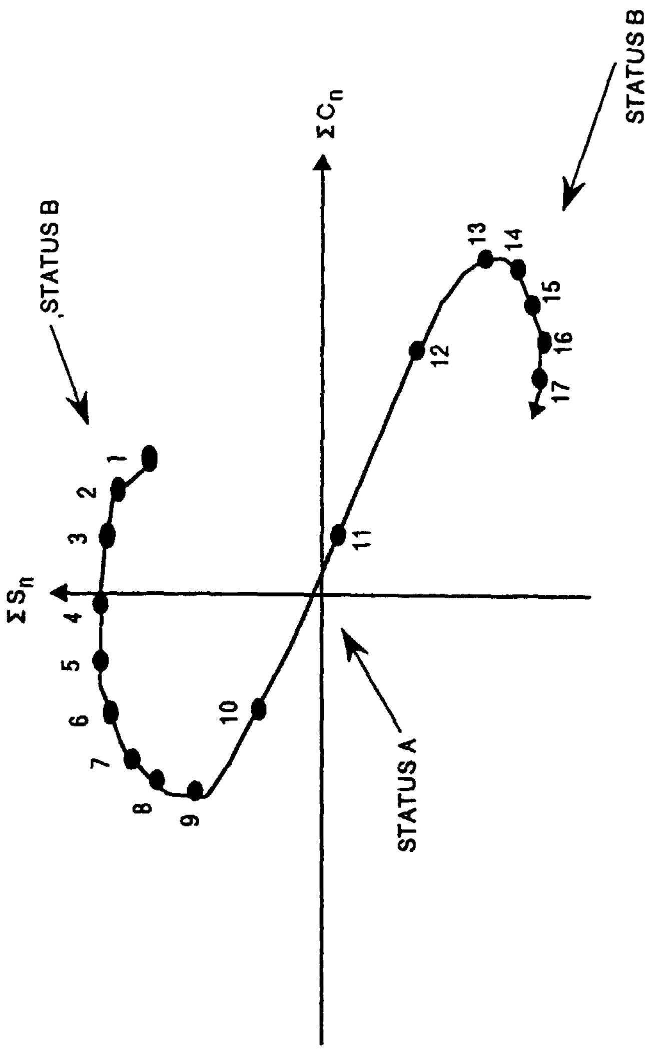
ΣCn
ΣSn
STATUS B
STATUS B
STATUS A
1
2
3
4
5
6
7
8
9
10
11
12
13
14
15
16
17

FIG.5

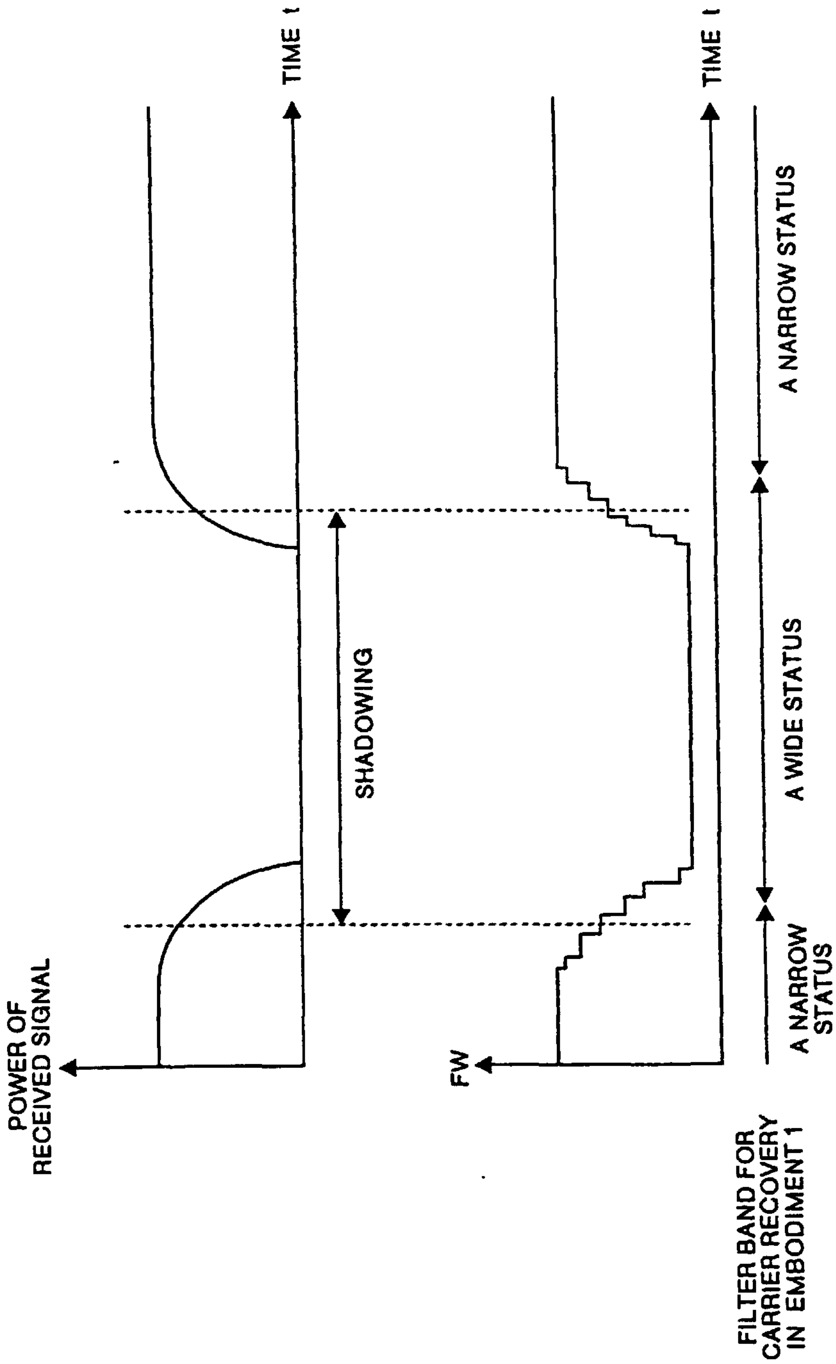
POWER OF RECEIVED SIGNAL
TIME t
SHADOWING
FW
TIME t
A NARROW STATUS
A WIDE STATUS
A NARROW STATUS
FILTER BAND FOR CARRIER RECOVERY IN EMBODIMENT 1

FIG.6

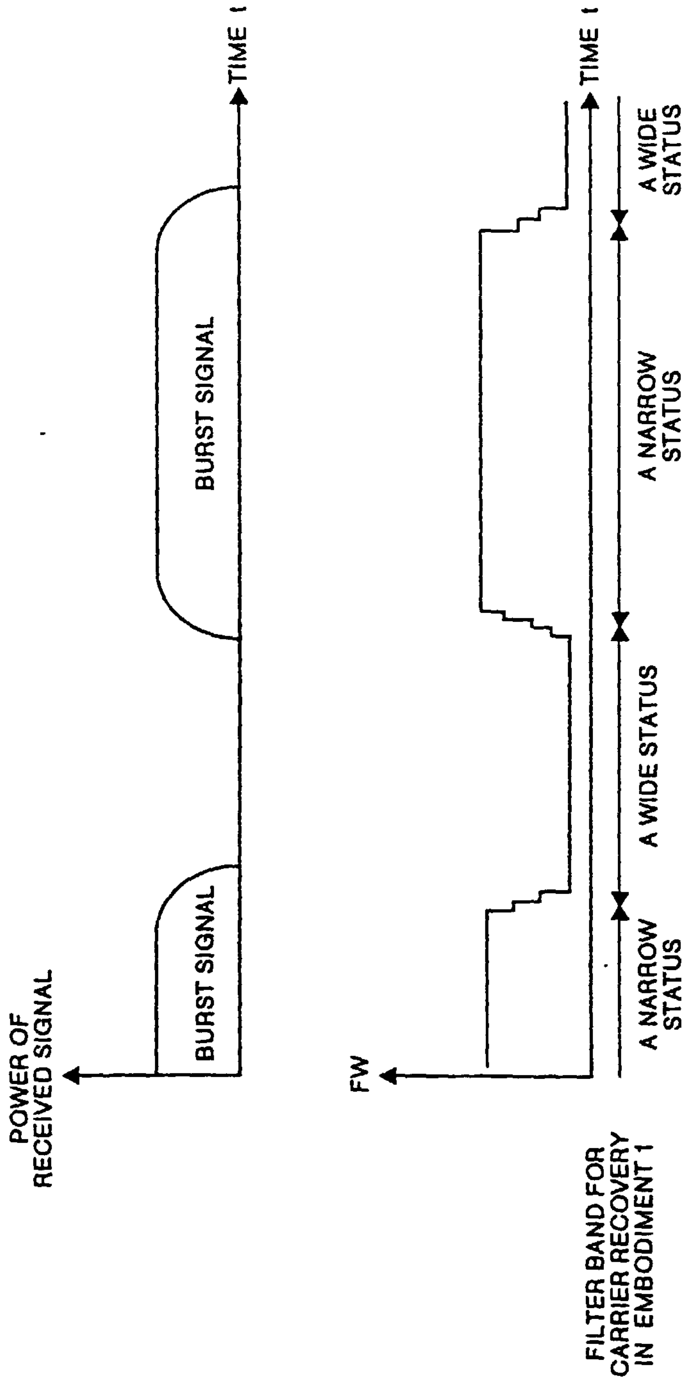
POWER OF
RECEIVED SIGNAL
BURST SIGNAL
BURST SIGNAL
TIME t
FW
TIME t
A NARROW
STATUS
A WIDE STATUS
A NARROW
STATUS
A WIDE
STATUS
FILTER BAND FOR
CARRIER RECOVERY
IN EMBODIMENT 1

FIG.7

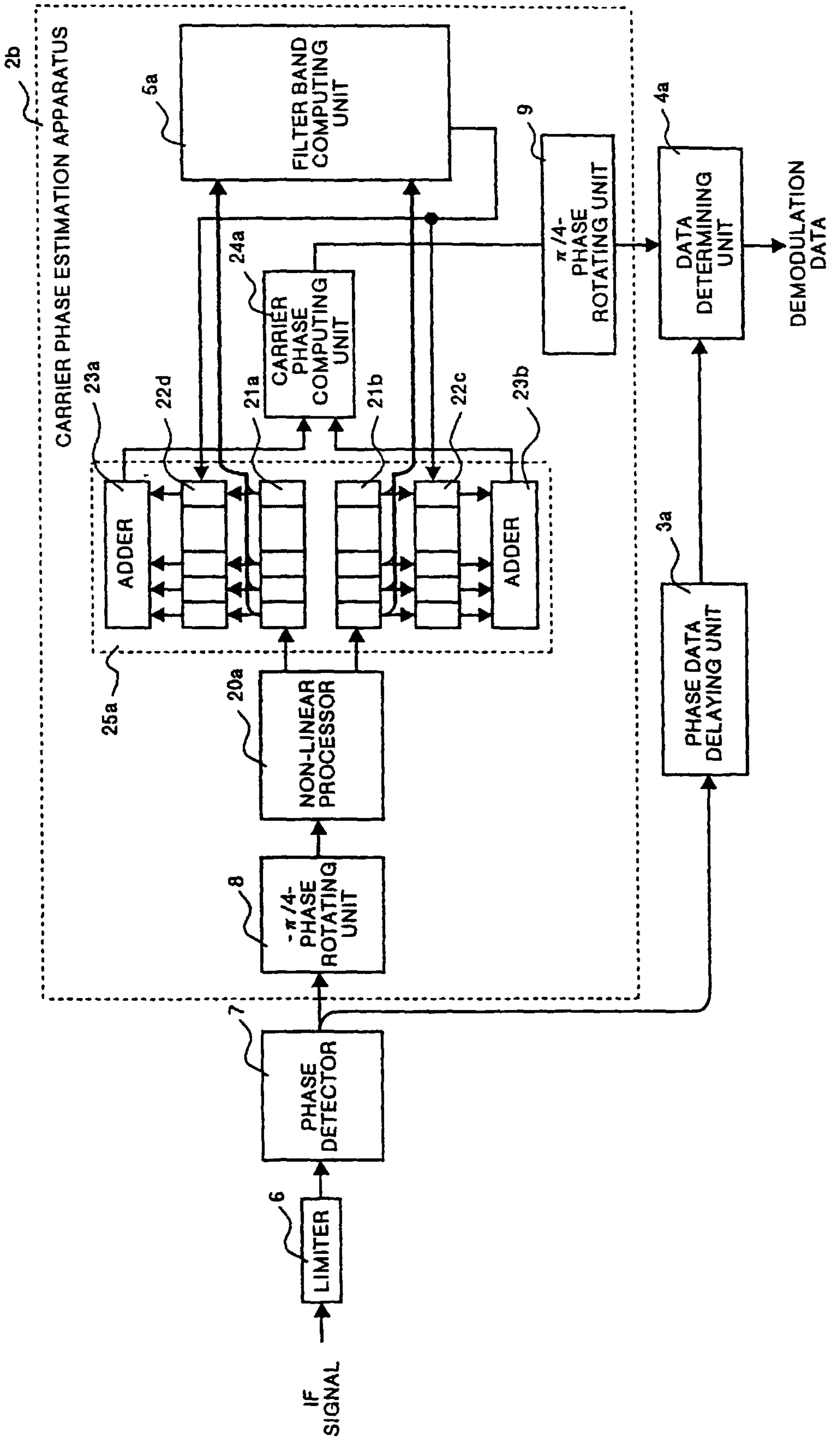
2b
CARRIER PHASE ESTIMATION APPARATUS
5a
FILTER BAND COMPUTING UNIT
9
π/4-PHASE ROTATING UNIT
4a
DATA DETERMINING UNIT
DEMODULATION DATA
24a
CARRIER PHASE COMPUTING UNIT
23a
22d
21a
21b
22c
23b
ADDER
ADDER
25a
20a
NON-LINEAR PROCESSOR
3a
PHASE DATA DELAYING UNIT
8
-π/4-PHASE ROTATING UNIT
7
PHASE DETECTOR
6
LIMITER
IF SIGNAL

FIG.8

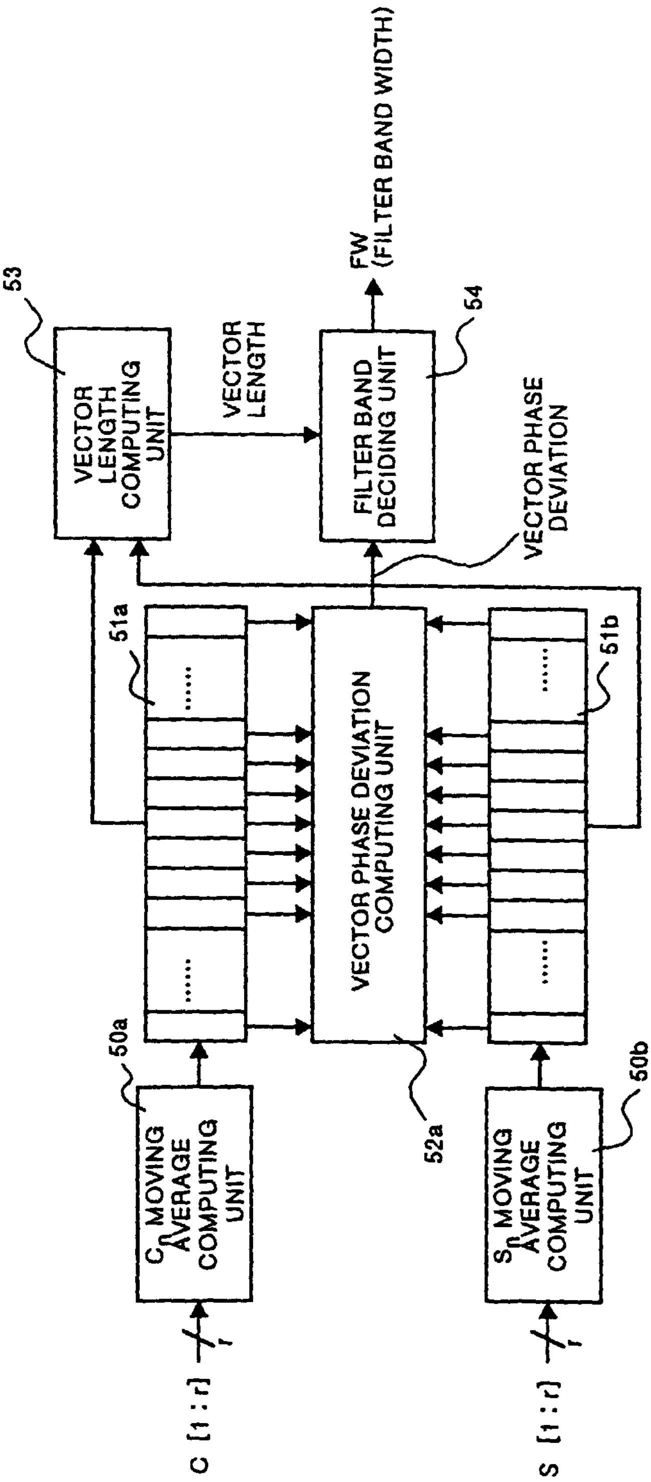
53
VECTOR LENGTH COMPUTING UNIT
VECTOR LENGTH
FILTER BAND DECIDING UNIT
54
FW (FILTER BAND WIDTH)
VECTOR PHASE DEVIATION
51a
51b
VECTOR PHASE DEVIATION COMPUTING UNIT
52a
50a
50b
Cn MOVING AVERAGE COMPUTING UNIT
Sn MOVING AVERAGE COMPUTING UNIT
C [1 : r]
S [1 : r]
r
r

FIG.9

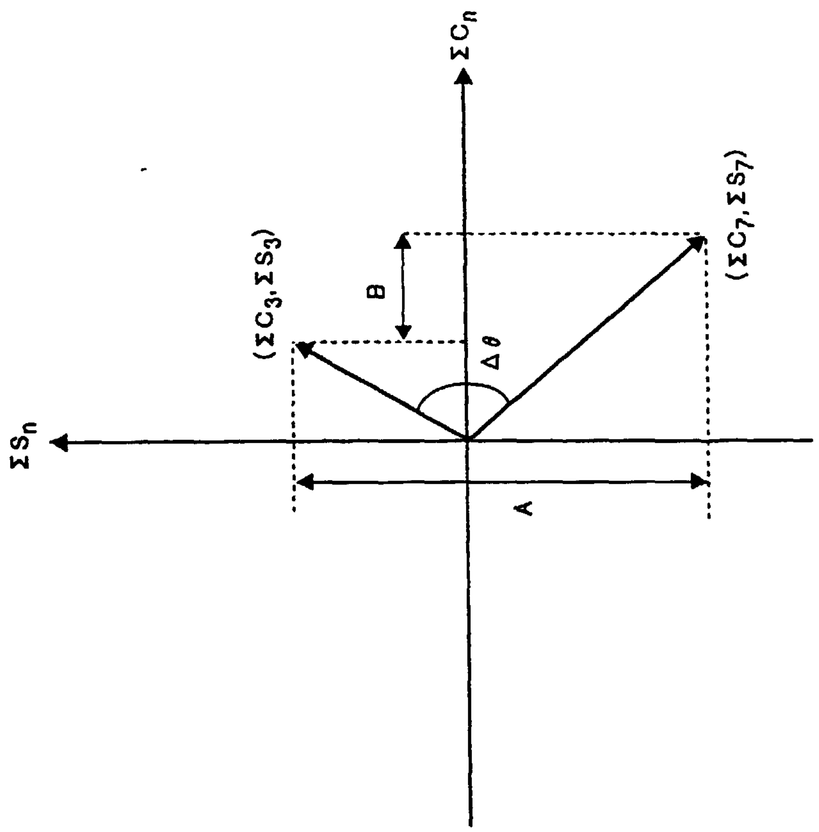
$\Sigma C_n$
$\Sigma S_n$
$(\Sigma C_3, \Sigma S_3)$
$(\Sigma C_7, \Sigma S_7)$
B
$\Delta\theta$
A

FIG.10

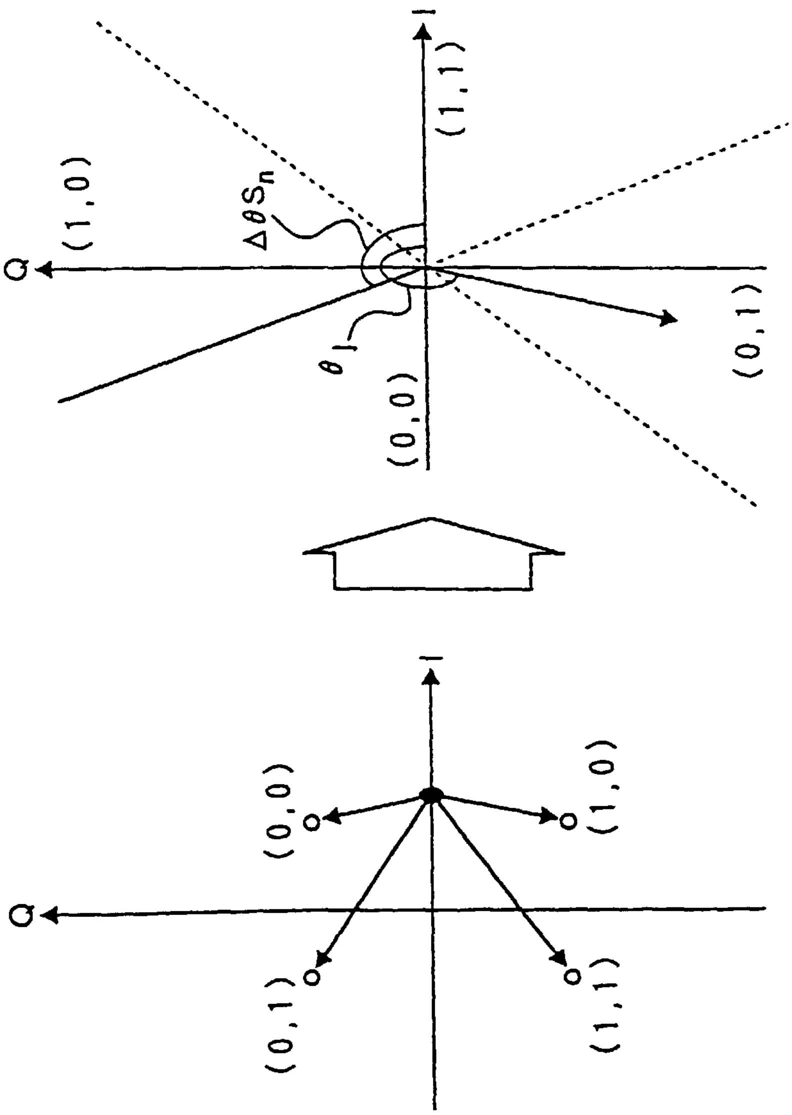


(a) TRANSMISSION-SIDE MAPPING

(b) RECEIVER-SIDE

FIG.11

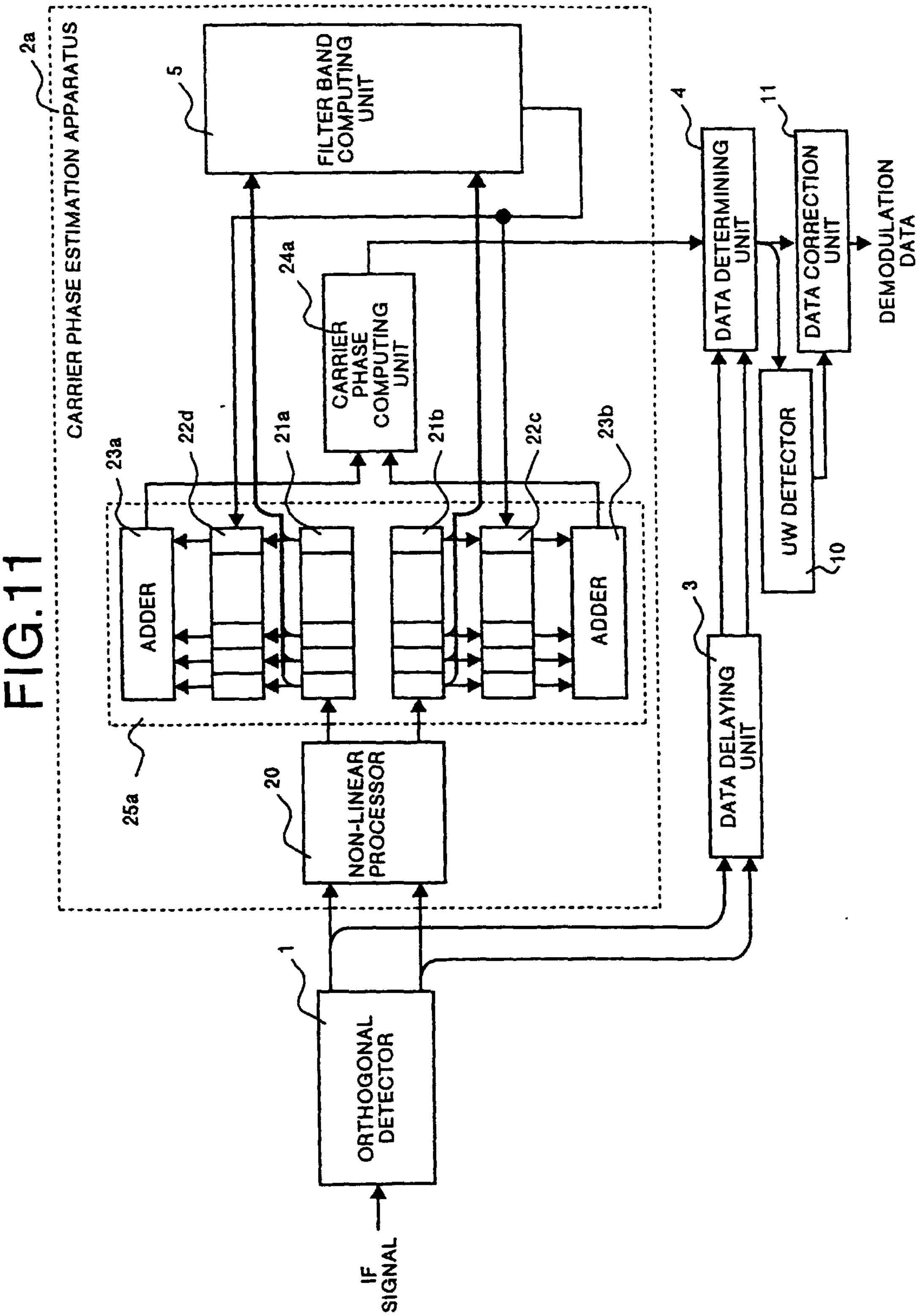

CARRIER PHASE ESTIMATION APPARATUS
2a
5
FILTER BAND COMPUTING UNIT
24a
CARRIER PHASE COMPUTING UNIT
23a
22d
21a
21b
22c
23b
ADDER
ADDER
25a
20
NON-LINEAR PROCESSOR
1
ORTHOGONAL DETECTOR
IF SIGNAL
3
DATA DELAYING UNIT
4
DATA DETERMINING UNIT
11
DATA CORRECTION UNIT
DEMODULATION DATA
UW DETECTOR
10

FIG.12

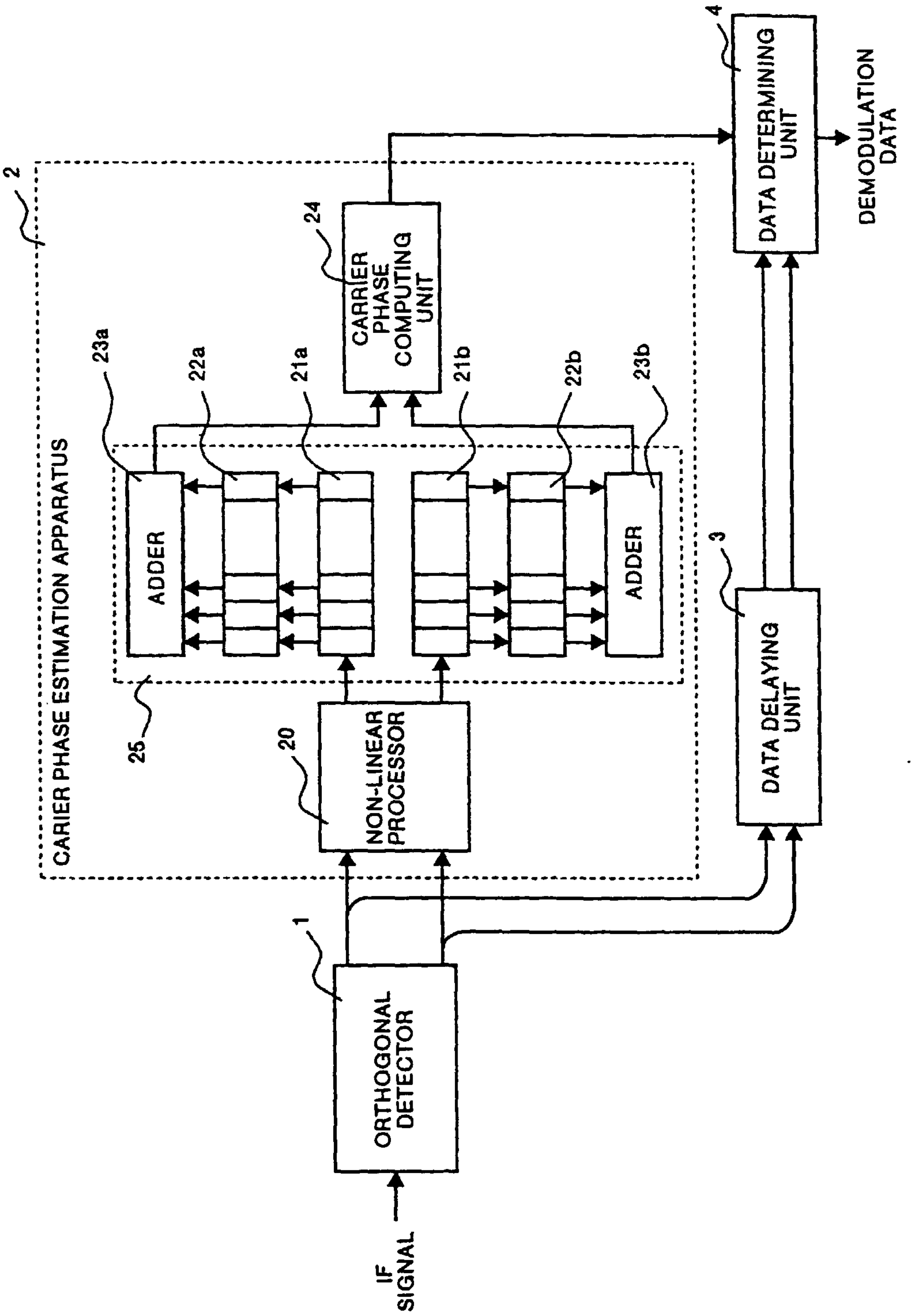
IF SIGNAL
ORTHOGONAL DETECTOR
1
NON-LINEAR PROCESSOR
20
CARIER PHASE ESTIMATION APPARATUS
2
25
ADDER
ADDER
23a
22a
21a
21b
22b
23b
CARRIER PHASE COMPUTING UNIT
24
DATA DELAYING UNIT
3
DATA DETERMINING UNIT
4
DEMODULATION DATA

FIG.13

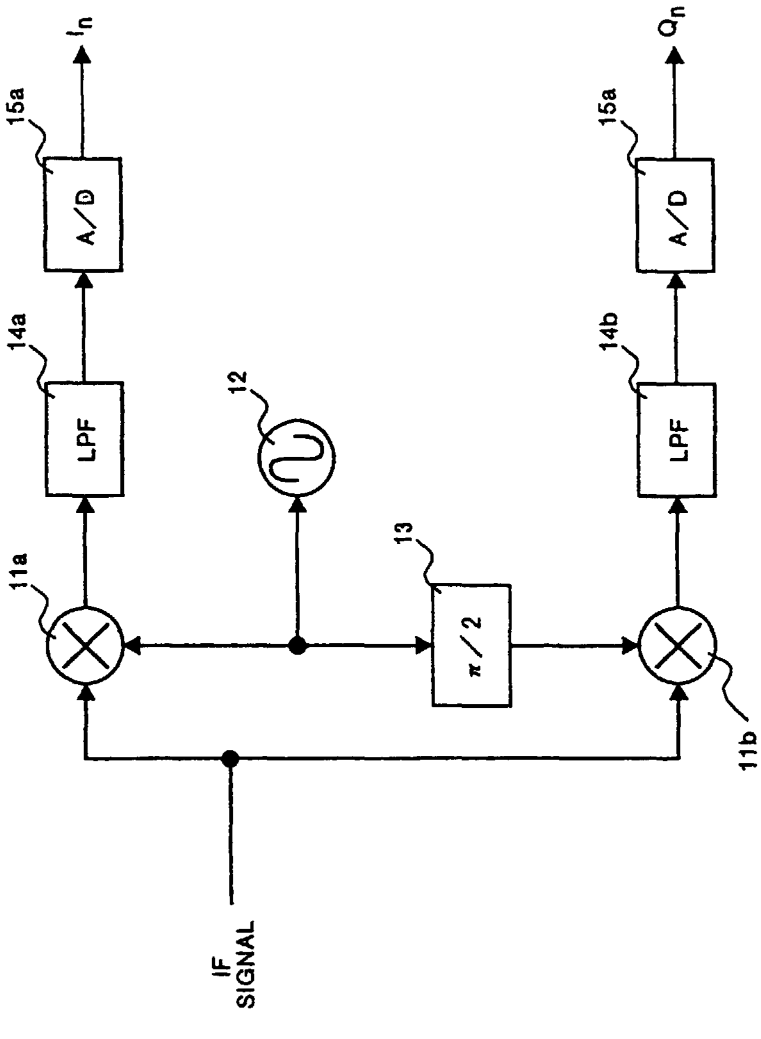

FIG.14

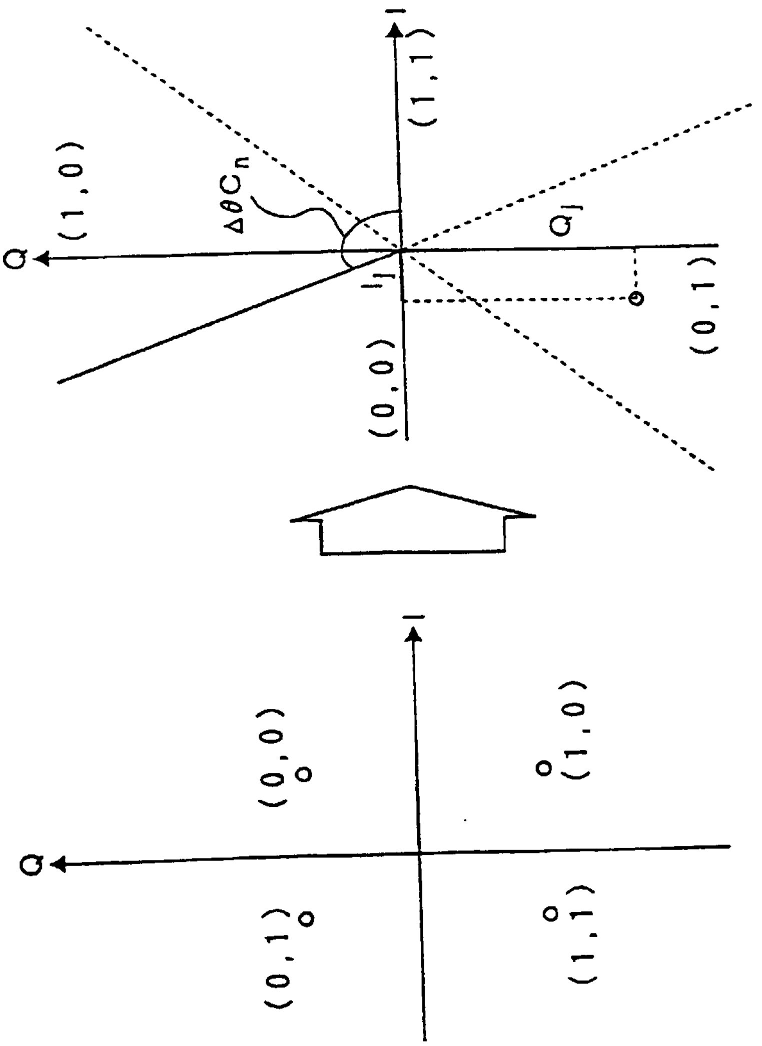


(a) TRANSMISSION-SIDE MAPPING

(b) RECEIVER-SIDE

## INTERNATIONAL SEARCH REPORT

International application No.
PCT/JP99/02805

A. CLASSIFICATION OF SUBJECT MATTER
Int.Cl$^6$ H04L27/22

According to International Patent Classification (IPC) or to both national classification and IPC

B. FIELDS SEARCHED

Minimum documentation searched (classification system followed by classification symbols)
Int.Cl$^6$ H04L27/22

Documentation searched other than minimum documentation to the extent that such documents are included in the fields searched
Jitsuyo Shinan Koho 1926-1996 Toroku Jitsuyo Shinan Koho 1994-1999
Kokai Jitsuyo Shinan Koho 1971-1999 Jitsuyo Shinan Toroku Koho 1996-1999

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, 6-276245, A (Mitsubishi Electric Corp.), 30 September, 1994 (30. 09. 94) & US, 5627861, A | 1-15 |
| A | JP, 10-41991, A (Nippon Telegraph & Telephone Corp.), 13 February, 1998 (13. 02. 98) (Family: none) | 1-15 |
| A | JP, 10-224420, A (Toshiba Corp.), 21 August, 1998 (21. 08. 98) & EP, 858197, A | 1-15 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 August, 1999 (10. 08. 99) | 17 August, 1999 (17. 08. 99) |
| Name and mailing address of the ISA/ Japanese Patent Office | Authorized officer |
| Facsimile No. | Telephone No. |

Form PCT/ISA/210 (second sheet) (July 1992)